# EUROPÄISCHE PATENTSCHRIFT

(11) **EP 1 929 233 B1**
(45) Veröffentlichungstag und Bekanntmachung des Hinweises auf die Patenterteilung: **29.05.2019**
(21) Anmeldenummer: 06805699.3
(22) Anmeldetag: 12.09.2006
(51) Int. Cl.: F28F 9/02, F02B 29/04, F28F 21/08

(54) **LADELUFTKÜHLER ODER ABGASKÜHLER FÜR EINE BRENNKRAFTMASCHINE EINES KRAFTFAHRZEUGES**
CHARGE-AIR COOLER OR EXHAUST GAS COOLER FOR AN INTERNAL COMBUSTION ENGINE OF A MOTOR VEHICLE
REFROIDISSEUR D'AIR DE SURALIMENTATION OU REFROIDISSEUR DE GAZ D'ECHAPPEMENT POUR UN MOTEUR A COMBUSTION INTERNE D'UN VEHICULE AUTOMOBILE

(30) Priorität: 12.09.2005 DE 102005043507; 02.11.2005 DE 102005052557; 28.07.2006 DE 102006035753
(43) Veröffentlichungstag der Anmeldung: 11.06.2008
(73) Patentinhaber: MAHLE Behr GmbH & Co. KG, 70469 Stuttgart (DE)
(72) Erfinder: BRAIC, Viorel, 70190 Stuttgart (DE); HENDRIX, Daniel, 70736 Fellbach (DE); MOLDOVAN, Florin, 70569 Stuttgart (DE)
(74) Vertreter: Grauel, Andreas
(86) Internationale Anmeldenummer: PCT/EP2006/008873
(87) Internationale Veröffentlichungsnummer: WO 2007/031274

(56) Entgegenhaltungen:
- EP-A- 1 707 911
- WO-A-03/081159
- WO-A-2004/090454
- DE-A1- 10 233 407
- DE-A1- 10 345 035
- DE-A1- 10 352 462

## Beschreibung

Die Erfindung betrifft einen Ladeluftkühler oder Abgaskühler für eine Brennkraftmaschine eines Kraftfahrzeuges.

Ein Ladeluftkühler oder Abgaskühler gemäß dem Oberbegriff von Anspruch 1 ist aus Dokument DE 10 345 035 bekannt.

Bekannt sind bereits Wärmetauscher, die als sogenannte Ganzaluminium-Wärmetauscher ausgebildet sind. Weiter ist bekannt, dass solche Wärmetauscher bzw. Ganzaluminium-Wärmetauscher als Ladeluftkühler für eine Brennkraftmaschine eingesetzt werden können. Bekannte Ladeluftkühler weisen zwei beabstandete Kästen auf, die über eine Mehrzahl von Rohren, wie Flachrohre, strömungsverbunden sind. Die zu kühlende Ladeluft strömt dann von dem einen der beiden Kästen durch die Rohre in den anderen der beiden Kästen. Zwischen den Rohren sind quer zu ihrer Längserstreckungsrichtung Zwischenräume vorgesehen, die von einem Kühlmittel durchströmt werden können. Der von diesen Rohren gebildete Rohrblock ist dabei von einem separaten, um den Rohrblock umfangsmäßig geschlossenen und eine Abdeckung bzw. Ummantelung bildenden Blech umgeben, so dass zwischen den beiden Kästen eine Kammer ausgebildet wird, durch welche die Rohre verlaufen. Diese Ummantelung ist dabei mit einem Zulauf für Kühlmittel sowie einem Ablauf für Kühlmittel versehen. Bekannt ist bei solchen Gestaltungen, dass die beiden Kästen des als Ganzaluminium-Wärmetauscher gestalteten Ladeluftkühlers jeweils einen Deckel sowie einen Boden aufweisen. Der Deckel bildet dabei eine Art Haube aus, die auf ihrer offenen Seite durch den Boden verschlossen wird. Im Boden sind dabei mehrere Durchgangsöffnungen vorgesehen, in welche die Rohre eingesetzt sind. Der bzw. die Böden können daher auch als Rohrboden bzw. Rohrböden bezeichnet werden. Das Einsetzen der Rohre in diese Böden erfolgt dabei in der Regel vor dem Zusammenfügen der betreffenden Böden mit den ihnen jeweils zugeordneten Deckeln des Kastens. Bei derartigen Gestaltungen werden einerseits die Rohre mit den Böden und andererseits die Böden mit den Kästen über geeignete Verbindungsmittel verbunden. Bekannt ist beispielsweise, dass die Rohre mit den Böden verlötet werden und die Böden mit den Kästen verlötet werden.

Bekannt ist beispielsweise, dass die Böden exakt flach bzw. eben ausgebildet sind und der Deckel auf den ihm jeweils zugeordneten Boden aufgesetzt und mit diesem verlötet wird. Bekannt ist weiter, dass die Böden im oder über den Kasten verlaufen können. Hierzu können die Böden beispielsweise einen in Längsrichtung der Rohrlängsachsen vorspringenden umlaufenden Rand aufweisen, der das dem Boden zugewandte Deckelende von außen umgreift oder im Bereich dieses Deckelendes in den Deckel eingesteckt ist. Dabei wird dieser vorspringende Rand des Bodens mit dem Deckel verlötet.

Bekannt sind weiter Ausgestaltungen derartiger Kästen, bei denen kein separater Boden vorhanden ist und die lediglich einen Deckel aufweisen. Bei solchen Gestaltungen sind die Rohre in ihren dem jeweiligen Kasten zugewandten Endbereichen aufgeweitet und in den aufgeweiteten Bereichen miteinander verlötet Die Einheit der so miteinander verlöteten, an ihren Endbereichen aufgeweiteten Rohre ist dabei in den Deckel eingesteckt und mit dem Deckel verlötet. Da nur die Endbereiche dieser Rohre aufgeweitet sind, werden in den dazwischenliegenden Bereichen nach wie vor Rohrzwischenräume ausgebildet.

Der Erfindung liegt nun die Aufgabe zugrunde, einen - insbesondere als Ganzaluminium-Wärmetauscher gestalteten - Wärmetauscher, wie Ladeluftkühler oder Abgaskühler für eine Brennkraftmaschine eines Kraftfahrzeugs, zu schaffen, der sich fertigungstechnisch einfach montieren und gut abdichten lässt bzw. eine gute Betriebssicherheit aufweist.

Diese Aufgabe wird durch einen Ladeluftkühler oder Abgaskühler gemäß Anspruch 1 gelöst. Bevorzugte Weiterbildungen sind Gegenstand der Unteransprüche.

Es wird also ein Ladeluftkühler oder Abgaskühler für eine Brennkraftmaschine eines Kraftfahrzeuges vorgeschlagen, mit einem ersten Kasten (2) und einem beabstandet zu diesem ersten Kasten (2) angeordneten zweiten Kasten und mit einer Vielzahl Rohren (10), mittels welchen der erste (2) und der zweite Kasten strömungsverbunden sind, und mit einer von einem Kühlmittel durchströmbaren Kammer (38), die zwischen den beiden Kästen (2) vorgesehen ist und durch welche mehrere oder alle der Rohre (10) verlaufen, über welche die beiden Kästen (2) strömungsverbunden sind, wobei zumindest einer dieser beiden Kästen (2) einen Deckel (12) aufweist, sowie einen mit diesem Deckel (12) verbundenen, und mit einer oder mehreren ersten Durchgangsöffnungen (16) zur Aufnahme der Rohre (10) versehenen Boden (14), wobei dieser Boden (14) wenigstens eine erste Nut (58) aufweist, in welche sich der Deckel (12) bzw. ein Wandabschnitt (66) des Deckels (12) desselben Kastens (2) erstreckt, wobei für die Begrenzung der Kammer (38) zumindest eine Abdeckung (40), insbesondere ein Abdeckblech, vorgesehen ist, und dass der Boden (14) wenigstens eine zweite Nut aufweist, in welche sich ein Wandabschnitt (68) der Abdeckung (40) erstreckt, wobei die erste Nut (58) und die zweite Nut eine in einem Randbereich (60) des Bodens (14) umlaufende Nut ist, wobei die erste Nut (58) und die zweite Nut eine in den Boden (14) eingeprägte bzw. eingepresste Nut ist, und wobei die Kammer (38) auf zwei weiteren gegenüberliegenden, insbesondere quer zu den von diesen Flachrohren (10) aufgespannten Ebenen gelegenen, und sich zwischen den Kästen (2) erstreckenden Seiten jeweils mittels der Abdeckung (40), insbesondere mittels des Abdeckblechs, begrenzt wird, und wobei die Kammer (38) auf zwei gegenüberliegenden Seiten mittels als Flachrohren ausgebildeten Rohren (10) begrenzt wird, über welche der erste Kasten (2) mit dem zweiten Kasten strömungsverbunden sind.

Gemäß einer besonders zu bevorzugenden Weiterbildung wird die zwischen den Kästen vorgesehene Kammer auf den in Längserstreckungsrichtung der Rohre gegenüberliegenden Seiten von den Kästen begrenzt. Dies ist in vorteilhafter Ausgestaltung so, dass die Kammer auf der einen der beiden in Längserstreckungsrichtung der Rohre gegenüberliegenden Seiten von dem Boden des ersten Kastens begrenzt wird, und auf der anderen dieser beiden in Längserstreckungsrichtung der Rohre gegenüberliegenden Seiten von dem Boden des zweiten Kastens begrenzt wird.

Es wird ein Wärmetauscher vorgeschlagen, der einen ersten Kasten aufweist, sowie einen von diesem ersten Kasten beabstandet angeordneten zweiten Kasten. Der erste Kasten ist mit dem zweiten Kasten über eine Vielzahl von Rohren, die in vorteilhafter Ausgestaltung Flachrohre sind, strömungsverbunden. Der Wärmetauscher ist dabei so gestaltet, dass einer dieser beiden Kästen - vorzugsweise beide dieser Kästen jeweils - einen Deckel aufweist sowie einen mit diesem Deckel verbundenen und mit einem oder mehreren ersten Durchgangsöffnungen für die Rohre versehenen Boden.

Der Boden des ersten und / oder der Boden des zweiten Kastens weist wenigstens eine Nut auf, in welche sich ein - bzw. sich jeweils ein jeweiliger - Wandabschnitt des Deckels des (jeweils) selben Kastens erstreckt, und zwar insbesondere mit seinem diesem (jeweiligen) Boden zugewandten Endbereich. Alternativ oder ergänzend kann auch vorgesehen sein, dass der angesprochene Deckel des ersten und / oder des zweiten Kastens wenigstens eine Nut aufweist, in welcher sich (jeweils) ein (jeweiliger) Wandabschnitt des Bodens des (jeweiligen) selben Kastens erstreckt. Anzumerken ist, dass diejenige der alternativen Ausgestaltungen, bei denen wenigstens eine Nut im Boden des ersten und / oder im Boden des zweiten Kastens vorgesehen ist, in welche sich ein Wandabschnitt des jeweils zugeordneten Deckels erstreckt, in diversen Anwendungsfällen Vorteile gegenüber der alternativen Ausgestaltung bietet, bei der der Deckel des ersten und / oder der Deckel des zweiten Kastens wenigstens eine Nut aufweist, in welche sich (jeweils) ein (jeweiliger) Wandabschnitt des Bodens dieses (jeweils selben) Kastens erstreckt.

Wie auch die vorstehenden Ausführungen zeigen, können die Ausgestaltungen des Kastens bzw. des Bodens und des Deckels des Kastens bzw. das Zusammenwirken von Kasten und Boden bzw. das Zusammenwirken von Boden und Abdeckung sich auf einen der beiden Kästen beziehen oder auf beide Kästen. Entsprechendes gilt für die diesbezüglichen im Rahmen dieser Offenbarung offenbarten Weiterbildungen. Es kann beispielsweise auch vorgesehen sein, dass die Ausgestaltung des Kastens bzw. dessen Boden und / oder Deckel bzw. das Zusammenwirken des Bodens des Kastens mit einer Abdeckung in Bezug auf den ersten Kasten und den zweiten Kasten unterschiedlich entsprechend unterschiedlichen Gestaltungen bzw. Weiterbildungen der Erfindung ist. Um die Darstellung in dieser Offenbarung einfacher zu gestalten werden die Gestaltungen bzw. Weiterbildungen weitgehend in Bezug auf einen Kasten bzw. dessen Deckel bzw. dessen Boden bzw. das Zusammenwirken dieses Kastens mit einer oder mehreren Abdeckungen erläutert, wobei hierdurch insbesondere mitgeteilt werden soll, dass die jeweilige Gestaltung in Bezug auf den ersten und / oder zweiten Kasten gegeben sein kann.

Es ist vorgesehen, dass die Nut bzw. die erste Nut bzw. die zweite Nut eine umlaufende oder eine im Wesentlichen umlaufende Nut ist. Dies kann beispielsweise so sein, dass der Boden in einem im Wesentlichen außen gelegenen Randbereich eine umlaufende Nut bzw. umlaufende erste Nut bzw. umlaufende zweite Nut aufweist. Dabei kann vorgesehen sein, dass der Deckel mit seinem, am dem Boden zugewandten Ende gelegenen, umlaufenden Wandabschnitt sich in die angesprochene erste Nut umlaufend erstreckt. Gemäß der Erfindung ist die im Boden vorgesehene Nut bzw. erste Nut bzw. zweite Nut eine in den Boden eingeprägte bzw. eingepresste, umlaufende, Nut. Die Nut bzw. erste Nut bzw. zweite Nut ist in einem Randbereich bzw. außen gelegenen Randbereich des Bodens vorgesehen, und zwar im Bereich, der zwischen der Anordnung der ersten Durchgangsöffnungen des Bodens und dem äußeren Rand dieses Bodens gelegen ist. Die Nut bzw. erste Nut bzw. zweite Nut kann dabei so eingeprägt bzw. eingepresst sein, dass sie auf der einen Seite des Bodens die Nut bzw. erste Nut bzw. zweite Nut ausbildet und auf der anderen Seite ein entsprechender (erster bzw. zweiter) Vorsprung bzw. eine entsprechende (erste bzw. zweite) Profilierungserhöhung, insbesondere Wulst, ausbildet. Anzumerken ist, dass durch die Formulierung "Nut bzw. erste Nut bzw. zweite Nut" alternative Gestaltungen angesprochen werden, die aber gemäß einer Weiterbildung auch in entsprechender Kombination gegeben sein können.

Gemäß einer besonders zu bevorzugenden Weiterbildung der Erfindung ist vorgesehen, dass eine erste Profilierungserhöhung quer, insbesondere senkrecht, zur Längserstreckungsrichtung der Rohre von dem von den Rohren, insbesondere Flachrohren, gebildeten Rohrblock beabstandet ist, so dass quer, insbesondere senkrecht, zur Längserstreckungsrichtung der Rohre wenigstens ein erster Zwischenraum zwischen diesem Rohrblock und dieser ersten Profilierungserhöhung gebildet wird, wobei für die Begrenzung der Kammer zumindest eine Abdeckung, insbesondere Abdeckblech, vorgesehen ist, und wobei sich ein - endseitiger - Wandabschnitt bzw. Rand dieser Abdeckung in diesen ersten Zwischenraum erstreckt. Dabei kann vorgesehen sein, dass dieser sich in den zwischen dem Rohrblock und der ersten Profilierungserhöhung gebildeten ersten Zwischenraum erstreckende Wandabschnitt der Abdeckung im Wesentlichen an diesem Rohrblock und / oder an dieser ersten Profilierungserhöhung anliegt und / oder mit Rohren des Rohrblocks und / oder mit der ersten Profilierungserhöhung, beispielsweise mittels Lotplattierung, verlötet ist.

Ein Wandabschnitt der Abdeckung erstreckt sich in einen ersten Zwischenraum der genannten Art und ein Wandabschnitt des dem betreffenden Boden zugeordneten Deckels erstreckt sich in einer ersten Nut dieses Deckels, wobei vorgesehen ist, dass die erste Profilierungserhöhung dadurch ausgebildet ist, dass die erste Nut (auf der anderen Seite dieses Bodens) in diesen Boden eingeprägt oder eingepresst ist.

Gemäß einer vorteilhaften Weiterbildung ist vorgesehen, dass der Boden eine oder mehrere von der bzw. den ersten Durchgangsöffnungen verschiedene zweite Durchgangsöffnungen aufweist und der Deckel auf seiner dem Boden zugewandten Seite einen oder mehrere Vorsprünge, wie beispielsweise Laschen, aufweist, von denen sich jede in oder durch jeweils eine zweite Durchgangsöffnung erstreckt. Die ersten Durchgangsöffnungen sind dabei diejenigen, die im Boden zur Aufnahme der Rohre ausgebildet werden. Die zweiten Durchgangsöffnungen können beispielsweise im Nutgrund der wenigstens einen ersten Nut des Bodens vorgesehen sein.

Der Boden ist in vorteilhafter Weiterbildung mit dem Deckel verlötet, und zwar insbesondere fluiddicht verlötet. Das Verlöten kann beispielsweise mittels Lotplattieren oder auf andere Weise erfolgt sein. Bevorzugt ist ferner, dass die wenigstens eine Abdeckung, insbesondere Abdeckblech, mit dem Boden verlötet ist.

In vorteilhafter Ausgestaltung ist vorgesehen, dass das Lot, mittels welchem der Boden und der Deckel verlötet ist, in der wenigstens einen ersten Nut gegeben ist, die im Boden vorgesehen ist und in welche sich zumindest ein Wandabschnitt des Deckels erstreckt oder - alternativ - im Bereich des zwischen der zweiten Profilierungserhöhung und dem Rohrblock gebildeten Zwischenraum.

Die Abdeckung ist in vorteilhafter Weise im Bereich des Zwischenraums, der zwischen der zweiten Profilierungserhöhung des Bodens und dem Rohrblock ausgebildet wird, mit dieser zweiten Profilierungserhöhung und / oder mit den dortigen Rohrabschnitten von Rohren des Rohrblocks verlötet oder - in alternativer Gestaltung - im Bereich der zweiten Nut, so dass Lot in dieser zweiten Nut gegeben ist. Das Verlöten erfolgt in vorteilhafter Weiterbildung mittels Lotplattierung.

Gemäß einer vorteilhaften Weiterbildung ist der Boden im Wesentlichen flach bzw. eben ausgebildet ist. Es kann vorgesehen sein, dass sämtliche Teile des Kastens bzw. beider Kästen, also insbesondere der (jeweilige) Boden und der Deckel, aus Blech geformt sind. Auch die wenigstens eine Abdeckung kann aus Blech geformt sein. Der Boden bzw. die Böden sind vorteilhafter Weise einstückig ausgebildet bzw. aus einem einstückigen Teil gefertigt.

Es ist insbesondere vorgesehen, dass die bzw. sämtliche Rohre in der quer zu der Längserstreckungsrichtung gesehenen Richtung beabstandet sind, so dass Rohrzwischenräume für eine Durchströmung mit einem von einem durch die Rohre strömenden Medium (insbesondere Abgas oder Ladeluft) verschiedenen Medium (insbesondere Kühlmittel) ausgebildet werden. Solche Rohrzwischenräume können insbesondere jeweils zwischen benachbarten Rohren gegeben sein. Die Rohre können in ihrem Inneren einen oder mehrere Kanäle ausbilden. Anzumerken ist, dass als "Rohrblock" im Sinne dieser Anmeldung die Einheit der Rohre - insbesondere in ihrer montierten Anordnung - bezeichnet wird. Der Begriff "Rohrblock" schließt also die angesprochenen Rohrzwischenräume nicht aus, und soll insbesondere nicht anzeigen, dass die Rohre in Kontakt miteinander stehen müssen.

Beispielsweise kann auch vorgesehen sein, dass in die Rohrzwischenräume Turbulenzeinlagen eingesetzt sind. Diese können beispielsweise die jeweils benachbarten Rohre kontaktieren und / oder mit diesen verlötet sein, und zwar insbesondere mittels Lotplattieren.

Die Kammer kann eine Einlassöffnung für ein Kühlmittel, wie Wasser oder dergleichen, sowie eine Auslassöffnung für das Kühlmittel aufweisen.

Es kann vorgesehen sein, dass in den Rohren Rippen vorgesehen sind, und zwar insbesondere zur insbesondere Verbesserung der Wärmeleitung.

Es ist vorgesehen, dass der Wärmetauscher ein Ladeluftkühler oder ein Abgaskühler für eine Brennkraftmaschine eines Kraftfahrzeugs ist. Dabei kann vorgesehen sein, dass die Ladeluft bzw. das Abgas mittels dieses Ladeluftkühlers bzw. Abgaskühlers abgekühlt werden kann. Es kann vorgesehen sein, dass die Ladeluft bzw. das Abgas in den einen der beiden Kästen des Wärmetauschers eintritt, und anschließend durch die Rohre in den anderen der beiden Kästen strömt. Durch die Rohrzwischenräume bzw. die angesprochene Kammer kann dabei ein Kühlmittel strömen.

In vorteilhafter Ausgestaltung ist der erfindungsgemäße Wärmetauscher ein sogenannter Ganzaluminium-Wärmetauscher bzw. besteht im Wesentlichen vollständig aus Aluminium.

Der Deckel ist vorzugsweise haubenförmig ausgebildet.

Die Rohre, über welche der erste Kasten mit dem zweiten Kasten strömungsverbunden sind, sind vorzugsweise - insbesondere alle - Flachrohre. Bevorzugt ist ferner, dass die bzw. sämtliche Rohre, über welche der erste Kasten mit dem zweiten Kasten strömungsverbunden sind, parallel zueinander verlaufen. Die Rohre, über welche der erste Kasten mit dem zweiten Kasten strömungsverbunden sind, sind insbesondere zwischen dem ersten Kasten und dem zweiten Kasten angeordnet sind.

In einer weiteren vorteilhaften Ausführung weist der Wärmetauscher mindestens eine Aussparung, insbesondere mehrere Aussparungen, auf. Durch die Aussparung kann insbesondere während des Fügeprozesses, insbesondere während des Lötprozesses, besonders vorteilhaft eine Kraft auf die Rohre aufgebracht werden.

In einer weiteren vorteilhaften Ausführung weist die Aussparung eine Breite e, h und eine Länge d, i auf. Insbesondere weist die mindestens eine Aussparung des ersten Seitenwandabschnitts eine Breite h und eine Länge i auf. Die mindestens eine Aussparung des zweiten Seitenwandabschnitts weist eine Breite e und eine Länge d auf.

Vorteilhaft ist, dass der sich in den zwischen dem Rohrblock und der zweiten Profilierungserhöhung gebildete zweite Zwischenraum erstreckende Wandabschnitt des Deckels im Wesentlichen an diesem Rohrblock und / oder an dieser zweiten Profilierungserhöhung anliegt.

Vorteilhaft ist, dass der Boden eine oder mehrere von der bzw. den ersten Durchgangsöffnungen verschiedene zweite Durchgangsöffnungen aufweist und der Deckel auf seiner dem Boden zugewandten Seite einen oder mehrere Vorsprünge, insbesondere Laschen, aufweist, von den sich jede in oder durch eine zweite Durchgangsöffnung erstreckt.

Vorteilhaft ist, dass die wenigstens eine zweite Durchgangsöffnung in der wenigstens einen ersten Nut vorgesehen ist, und zwar insbesondere im Nutgrund dieser wenigstens einen ersten Nut.

Vorteilhaft ist, dass der Boden im Wesentlichen flach bzw. eben gestaltet ist.

Vorteilhaft ist, dass der Wärmetauscher im Wesentlichen vollständig aus Aluminium besteht.

Vorteilhaft ist, dass der Wärmetauscher mindestens eine Aussparung, insbesondere mehrere Aussparungen, aufweist.

Vorteilhaft ist, dass die Aussparung eine Breite und eine Länge aufweist.

Im Folgenden sollen nun beispielhafte Ausführungsformen der Erfindung anhand der Figuren 13 bis 23 näher erläutert werden. Die Figuren 1 bis 12 zeigen Gestaltungen, die nicht unter den Schutzbereich der Ansprüche fallen. Es zeigt:
- Fig. 1: ein erstes Ausführungsbeispiel einen Wärmetauscher in teilweiser Ansicht, wobei der Deckel und der Boden des Kastens sowie einige Rohre und die Abdeckung aufgeschnitten dargestellt sind;
- Fig. 2: die Gestaltung gemäß Fig. 1 in Explosionsansicht;
- Fig. 3: die Gestaltung gemäß Fig. 2, wobei allerdings der Boden des Kastens nicht aufgeschnitten dargestellt ist;
- Fig. 4: die Gestaltung gemäß Fig. 3, wobei allerdings die Rohre nicht aufgeschnitten dargestellt sind;
- Fig. 5: die Gestaltung gemäß Fig. 3 mit teilweise entfernter Abdeckung;
- Fig. 6: die Gestaltung gemäß Fig. 2 mit teilweise entfernter Abdeckung;
- Fig. 7: eine erste Schrägansicht der dem Inneren des Kastens zugewandten Seite des Bodens gemäß dem ersten Ausführungsbeispiel;
- Fig. 8: eine zweite Ansicht bzw. Schrägansicht der dem Inneren des Kastens zugewandten Seite des Bodens gemäß dem ersten Ausführungsbeispiel;
- Fig. 9: eine Schrägansicht der dem Inneren des Kastens abgewandten Seite des Bodens gemäß dem ersten Ausführungsbeispiel;
- Fig. 10: eine Seitenansicht der Gestaltung gemäß den Fig. 1 bis 9;
- Fig. 11: eine Explosionsansicht eines zweiten Ausführungsbeispiels eines Wärmetauschers in teilweiser Ansicht;
- Fig. 12: den Boden des Kastens aus der Gestaltung gemäß Fig. 11 in Schrägansicht;
- Fig. 13: eine Explosionsansicht einer weiteren Ausführungsform des Wärmetauschers;
- Fig. 14: eine isometrische Darstellung des zusammengebauten Wärmetauschers;
- Fig. 15: eine Ausführungsform der Kammer-Seitenwand und der Seitenwandabschnitte;
- Fig. 16: eine weitere Ausführungsform der Kammer-Seitenwand und der Seitenwandabschnitte;
- Fig. 17: eine weitere Ausführungsform der Kammer-Seitenwand und der Seitenwandabschnitte;
- Fig. 18: eine weitere Ausführungsform der Kammer-Seitenwand und der Seitenwandabschnitte;
- Fig. 19: eine weitere Ausführungsform der Kammer-Seitenwand und der Seitenwandabschnitte;
- Fig. 20: eine weitere Ausführungsform der Kammer-Seitenwand und der Seitenwandabschnitte;
- Fig. 21: eine weitere Ausführungsform der Kammer-Seitenwand und der Seitenwandabschnitte mit einer Platte;
- Fig. 22: eine isometrische Darstellung einer weiteren Ausführungsform der Verbindung des Deckels mit dem Boden und der Seitenabdeckung;
- Fig. 23: eine Schnittdarstellung der weiteren Ausführungsform der Verbindung des Deckels mit dem Boden und der Seitenabdeckung.

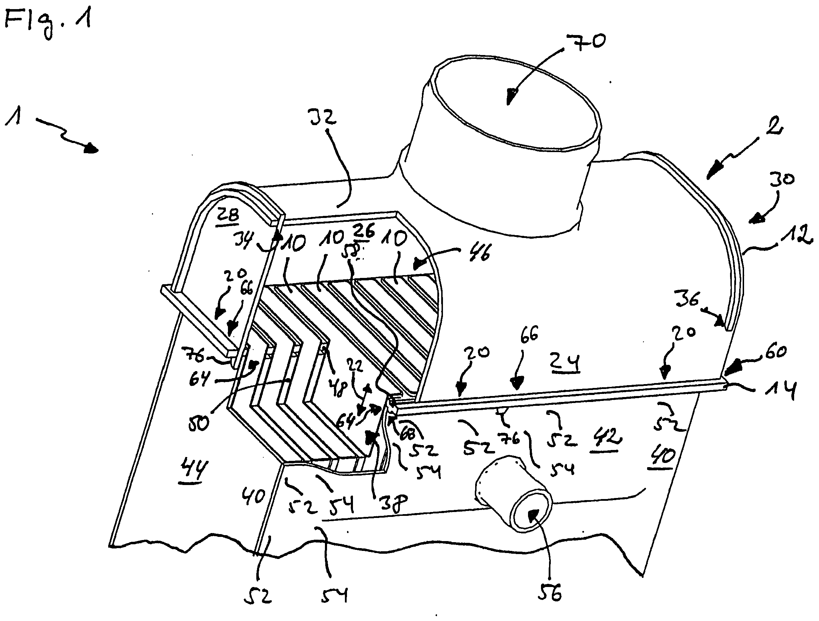

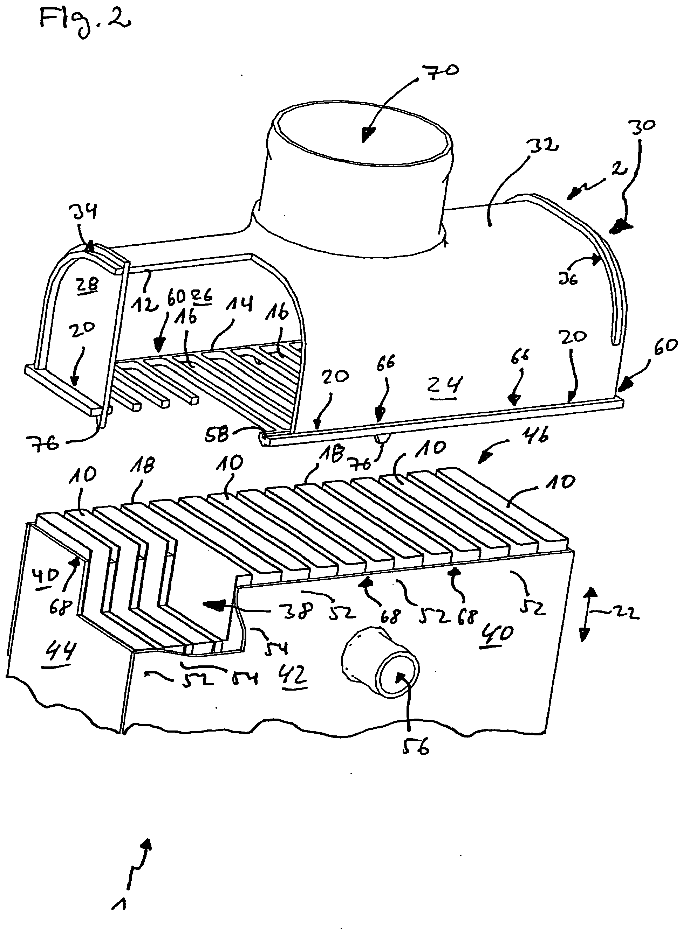

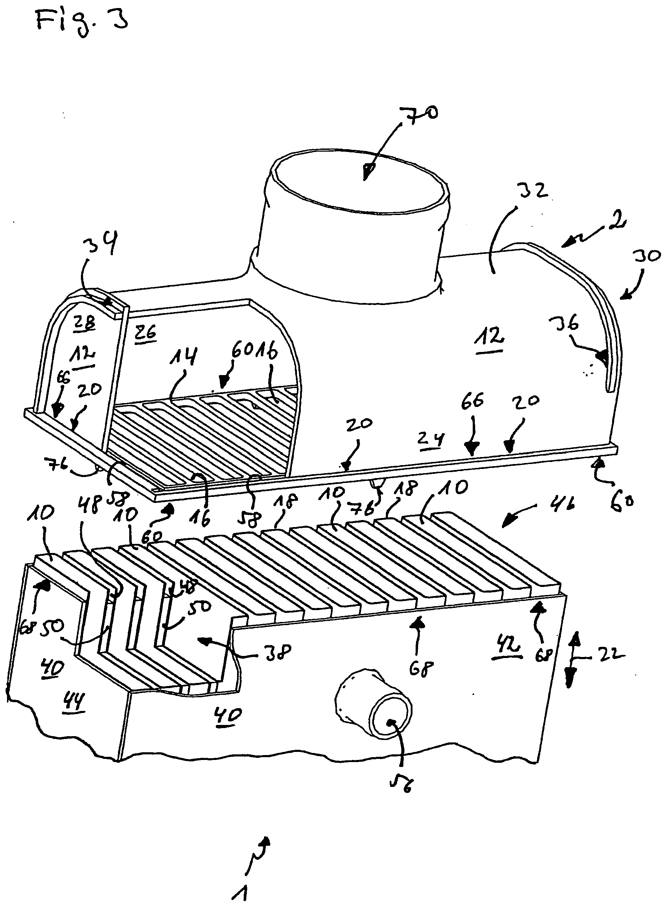

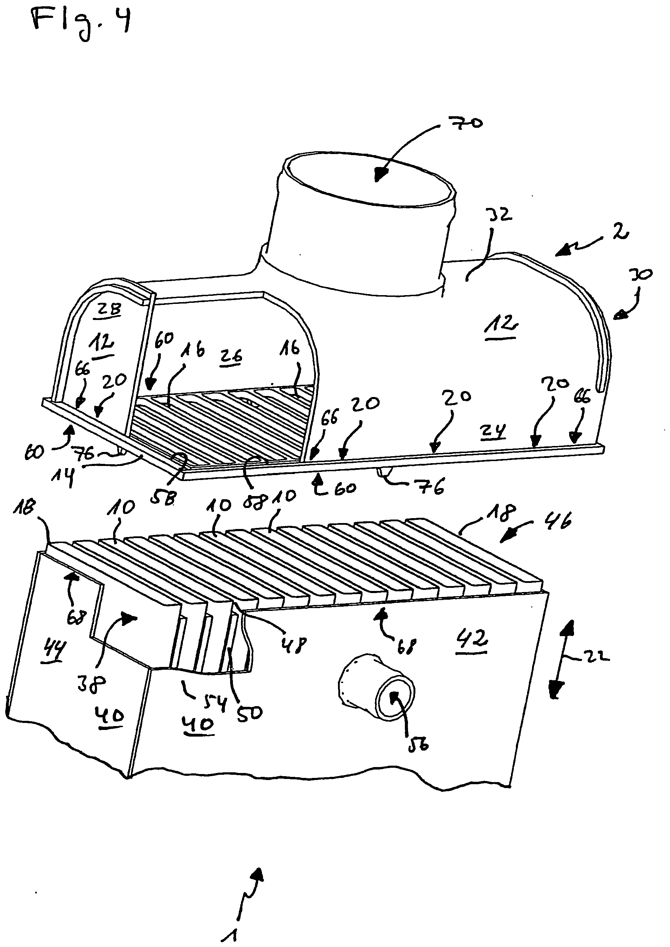

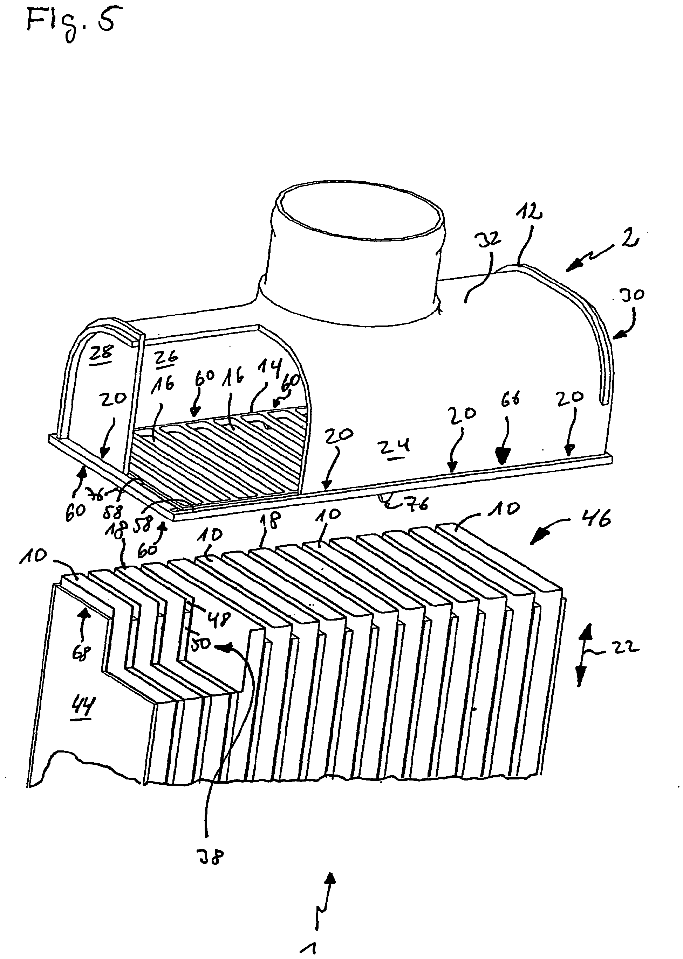

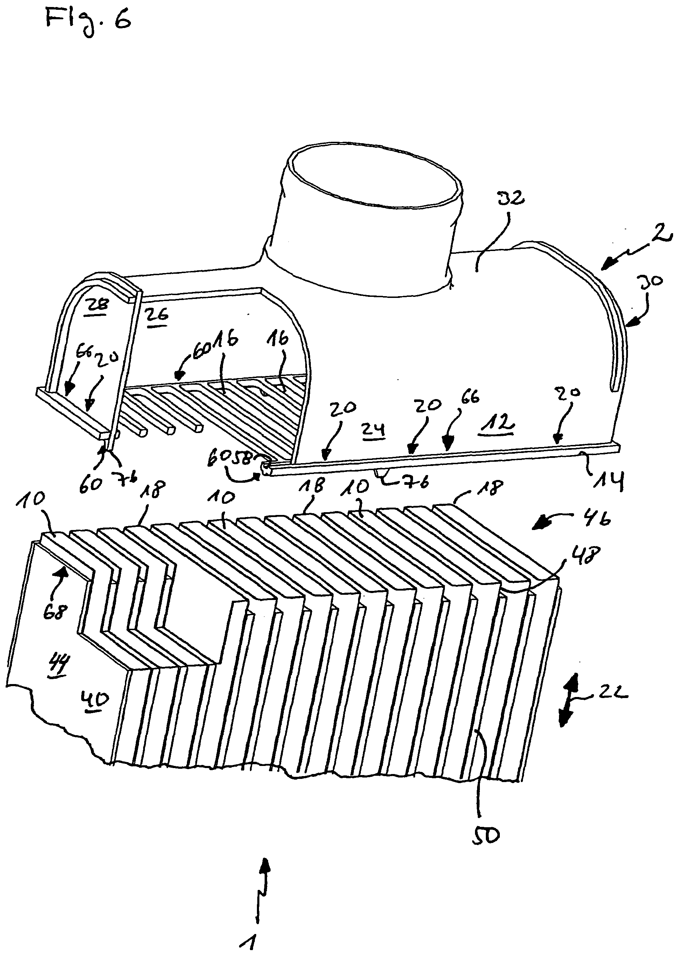

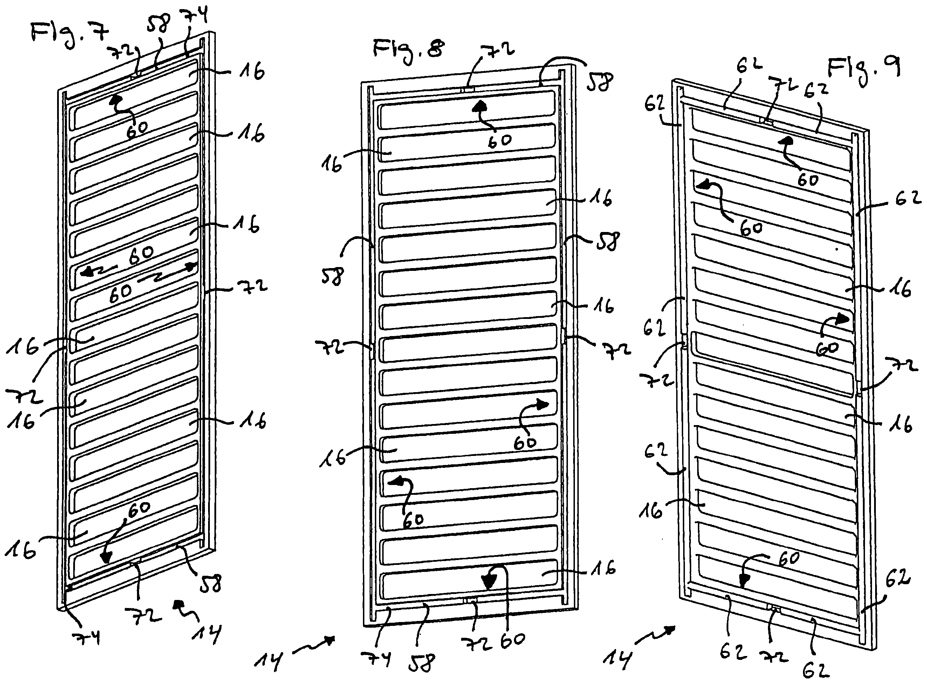

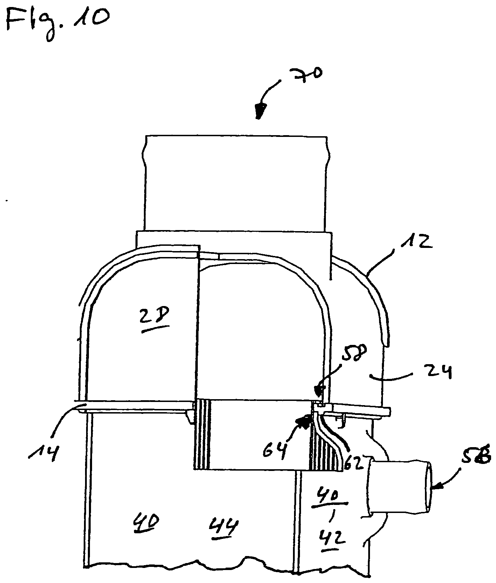

Anhand der Fig. 1 bis 10 soll im Folgenden zunächst ein erstes Ausführungsbeispiel eines erfindungsgemäßen Wärmetauschers 1 erläutert werden.

Der Wärmetauscher 1, der beispielsweise ein Ladeluftkühler oder Abgaskühler für eine Brennkraftmaschine eines Kraftfahrzeugs ist, weist einen ersten Kasten 2 auf, sowie einen beabstandet zu diesem ersten Kasten 2 angeordneten (nicht dargestellten) zweiten Kasten.

Der Wärmetauscher 1 weist eine Vielzahl von Rohren 10 auf, mittels welchen der erste Kasten und der zweite Kasten strömungsverbunden sind, Dies ist so, dass die Rohre 10 jeweils mit ihrem einen Ende in den ersten Kasten münden und in ihrem zweiten, dem ersten Ende entgegengesetzten, Ende in den zweiten Kasten münden.

Der erste Kasten 2 weist einen Deckel 12 auf sowie einen mit diesem Deckel 12 verbundenen Boden 14. In entsprechender Weise weist der zweite Kasten einen Deckel sowie einen mit diesem Deckel verbundenen Boden auf, was in den Figuren nicht gezeigt ist.

Der Boden 14 - und entsprechendes gilt für den Boden des zweiten Kastens - weist eine Vielzahl von ersten Durchgangsöffnungen 16 auf. Die Rohre 10, die sich gerade erstrecken, sind mit ihren dem ersten Kasten zugewandten Ende 18 in die ersten Durchgangsöffnungen 16 des Bodens 14 des ersten Kasten 2 jeweils eingesteckt. In entsprechender Weise sind die Rohre 10 mit ihren den ersten Enden 18 entgegengesetzten zweiten Enden - die nicht dargestellt sind - in die Durchgangsöffnungen des Bodens des zweiten Kastens eingesteckt. Die jeweiligen angesprochenen ersten 18 und zweiten Rohrenden sind mit dem Boden 14 des ersten Kastens 2 bzw. mit dem Boden des zweiten Kastens verlötet, was vorzugsweise mittels Lotplattieren erfolgt.

Der Deckel 12 des ersten Kastens ist im Wesentlichen haubenförmig gestaltet. Auch der Deckel des zweiten Kastens ist im Wesentlichen haubenförmig gestaltet, wobei anzumerken ist, dass die exakte Form der entsprechenden Deckel unterschiedlich oder identisch gestaltet sein kann.

Der Deckel 12 des ersten Kastens - und entsprechendes gilt für den Deckel des zweiten Kastens - bildet einen den Rohren bzw. dem jeweils anderen Kasten zugewandten Endbereich 20 aus, der umfangsmäßig geschlossen ist. Dieser Endbereich 20 ist derart umfangsmäßig geschlossen, dass er um eine gedachte - in Längsrichtung 22 der Rohre 10 durch den Kasten 2 verlaufende - Achse herum umfangsmäßig geschlossen ist. Dabei kann vorgesehen sein - und entsprechendes kann für den Deckel des zweiten Kastens gelten -, dass das dem anderen Kasten, also hier dem zweiten Kasten, zugewandte Ende des Deckels 12 des ersten Kastens 2 - zumindest abgesehen von Laschen 76, die im Folgenden noch angesprochen werden, umfangsmäßig geschlossen ist und im Wesentlichen in einer senkrecht zur Rohrlängsrichtung 22 gelegenen Ebene - insbesondere vollständig - liegt.

Der Deckel 12 des ersten Kastens 2 - und entsprechendes kann für den Deckel des zweiten Kastens gelten - ist so gestaltet, dass er vier Seitenwände 24, 26, 28, 30 ausbildet sowie eine dem Boden 14 gegenüberliegende Wand bzw. einen dem Boden 14 gegenüberliegenden Wandabschnitt 32. Die erste Seitenwand 24 liegt der zweiten Seitenwand 26 gegenüber und die dritte Seitenwand 28 liegt der vierten Seitenwand 30 gegenüber. Diese vier Seitenwände 24, 26, 28, 30 sind jeweils im Wesentlichen quer zum Boden 14 des ersten Kastens 2 ausgerichtet. Die erste 24 sowie die zweite Seitenwand 26 sind jeweils im Wesentlichen quer zur dritten Seitenwand 28 bzw. vierten Seitenwand 30 ausgerichtet. Anzumerken ist, dass die Seitenwand 30 in den Fig. 1 bis 6 jeweils verdeckt ist.

Wie insbesondere anhand der Seitenwände 24, 26 deutlich wird, müssen diese Seitenwände allerdings keineswegs eben ausgebildet sein. So zeigen die Figuren, dass hier die Seitenwände 24, 26 gekrümmt in die dem Boden gegenüberliegende Wand 32 überführt werden, wobei eine relativ große Krümmung gegeben ist. Die Formgebung des Deckels 12 kann auch deutlich von der in den Figuren gezeigten Formgebung abweichen.

Der Deckel 12 kann ferner aus einem einstückigen Teil bzw. einstückigen Blech geformt sein, was in den Fig. 1 bis 10 allerdings nicht gezeigt ist.

Gemäß den Fig. 1 bis 10 sind die dritte 28 sowie die vierte Seitenwand 30 als von der Seitenwand 24, 26 sowie der Wand 30 separat hergestellte Teile ausgebildet. Die Wände 24, 26, 32 sind dort aus einem einstückigen Teil geformt. Insoweit besteht aber eine große Variationsvielfalt, die auch bei der Gestaltung gemäß den Fig. 1 bis 10 alternativ vorgesehen sein kann. In den Fig. 1 bis 10 ist gezeigt, dass in der Einheit aus den Wänden 24, 26, 32 Schlitze 34, 36 vorgesehen sind, in welche die Wände 28, 32 eingesteckt und dort verlötet sind.

Zwischen dem ersten 2 und dem zweiten Kasten wird eine Kammer 38 ausgebildet. In der Längserstreckungsrichtung 22 der Rohre 10 gesehen bzw. auf den in Längserstreckungsrichtung 22 der Rohre 10 gegenüberliegenden Seiten wird diese Kammer 38 auf der einen Seite von dem Boden 14 des ersten Kastens 2 und auf der anderen Seite von dem Boden des zweiten Kastens begrenzt. Auf den vier verbleibenden Seiten wird die Kammer 38 von einer Abdeckung 40 begrenzt. Diese Abdeckung 40 bildet hier einen im Wesentlichen umfangsmäßig geschlossenen Mantel aus. Die Abdeckung 40 wird hier von einer ersten Kammer-Seitenwand 42, einer dieser gegenüberliegenden, in den Fig. verdeckten zweiten Kammer-Seitenwand, einer sich quer zur ersten 42 und zweiten Kammer-Seitenwänden erstreckenden dritten Kammer-Seitenwand 44 sowie einer dieser dritten Kammer-Seitenwand 44 gegenüberliegenden, in den Fig. verdeckten vierten Kammer-Seitenwand gebildet. Die erste 42 und die zweite Kammer-Seitenwand erstrecken sich jeweils im Wesentlichen quer zu den durch die Flachrohre 10 aufgespannten Ebenen. Die vier Kammer-Seitenwände werden jeweils von einem Blech gebildet, wobei die vier Bleche beispielweise miteinander verlötet sein können. Sie können beispielsweise aber auch von einem Blech gebildet werden, das entsprechend geformt und an endseitigen Kanten beispielsweise verlötetet ist.

Die Flachrohre 10 sind parallel zueinander ausgerichtet, und zwar so, dass die von ihren aufgespannten Ebenen sich parallel zueinander erstrecken. Die Flachrohre 10 bilden hier eine Rohrreihe; alternativ können beispielsweise auch mehrere Rohrreihen von den Flachrohren 10 gebildet werden. Die aus den Flachrohren gebildete Anordnung wird auch als Rohrblock 46 bezeichnet. Die Flachrohre 10 sind zueinander beabstandet, so dass zwischen den Flachrohren 10 bzw. zwischen den jeweils benachbarten Flachrohren 10 Rohrzwischenräume 48 ausgebildet werden. In diesen Rohrzwischenräumen 48 sind Turbulenzeinlagen 50 vorgesehen, die beispielsweise mit den jeweils benachbarten Flachrohren 10 verlötet sein können. In den Rohren 10 sind nicht dargestellte Rippen vorgesehen.

Prinzipiell kann die Abdeckung 40 im Wesentlichen vollständig von dem Rohrblock 46 beabstandet sein. Hier ist allerdings vorgesehen, dass die dritte 44 und vierte Kammer-Seitenwand am Rohrblock 46 - im Wesentlichen vollständig - anliegt, wobei diese beiden Kammer-Seitenwände an gegenüberliegenden, endseitigen Rohren der Rohrreihe bzw. des Rohrblocks anliegen. Die erste 42 und zweite Kammer-Seitenwand liegen mit ihren umlaufenden Randbereichen 52 am Rohrblock an oder im Wesentlichen bzw. nahezu an, und sind ansonsten für die Bildung eines Verteilbereichs für das Kühlmittel zur Verteilung des Kühlmittels in die Rohrzwischenräume 48 bzw. zu den Turbulenzeinlagen 50 vom Rohrblock 46 beabstandet. Hierzu sind die erste 42 und zweite Kammer-Seitenwand bzw. die diesen entsprechenden Abdeckungen entsprechend geformt, wie z.B. mit gewölbtem Übergangsbereich 54.

Gemäß einer alternativen, in den Fig. nicht gezeigten Gestaltung können die dritte 44 und vierte Kammer-Seitenwand auch weggelassen sein, so dass die Kammer 38 an den entsprechenden Stellen stattdessen von den in der Rohrreihe außen gelegenen Flachrohren 10 bzw. deren außen gelegenen Oberflächen gebildet werden. Dabei können die verbleibenden Abdeckungen 40 bzw. die erste 42 und zweite Kammer-Seitenwand beispielsweise am Rohrblock 46 in ihren Randbereichen 52 verlötet sein, und zwar insbesondere umlaufend bzw. dicht.

Die Kammer 38 kann von einem Kühlmittel durchströmt werden. Zu diesem Zweck weist die Abdeckung bzw. Kammerwand eine Eintrittsöffnung sowie eine Austrittsöffnung für Kühlmittel auf. Gezeigt ist in den Fig. eine (Bezugszeichen 56) dieser Öffnungen, wobei an dieser ein Stutzen vorgesehen ist.

Die Flachrohre 10 verlaufen durch die Kammer 38, so dass in dieser Kammer 38 eine Wärmeübertragung zwischen dem die Rohre durchströmenden Medium bzw. Gas, wie Abgas bzw. Ladeluft, und dem diese durchströmenden Kühlmittel erfolgen kann.

Der Boden 14 des ersten Kastens 2 weist eine eingeprägte bzw. eingepresste erste Nut 58 auf. Diese erste Nut 58 ist im außen liegenden Randbereich 60 des Bodens 14 in diesem Boden 14 vorgesehen. Die erste Nut 58 ist eine umlaufende Nut bzw. ist umfangsmäßig geschlossen bzw. erstreckt sich umfangsmäßig geschlossen um eine bzw. die Längsachsen der Rohre 10 bzw. läuft um diese Längsachs(e) um. Die erste Nut 58 ist auf der dem Rohrblock 46 abgewandten Seite des Bodens 14 vorgesehen. Die erste Nut 58 ist derart in den Boden 14 eingeprägt bzw. eingepresst, dass auf der dem Rohrblock 46 zugewandten Seite des Bodens 14 durch dieses Einprägen bzw. Einpressen eine erste Profilierungserhöhung 62 ausgebildet ist. Die erste Profilierungserhöhung 62 ist folglich auch umlaufend ausgebildet. Eine derartige Gestaltung mit erster Profilierungserhöhung und erster Nut ist in entsprechender Weise in den Boden des zweiten Kastens eingeprägt bzw. eingepresst.

Die erste Profilierungserhöhung 62 ist quer bzw. senkrecht zur Längserstreckungsrichtung 22 der Rohre 10 von dem von den Flachrohren 10 gebildeten Rohrblock 46 beabstandet, so dass quer bzw. senkrecht zur Längserstreckungsrichtung 22 der Rohre 10 ein erster, hier um den Rohrblock 46 umlaufender, Zwischenraum 64 zwischen diesem Rohrblock 46 und dieser ersten Profilierungserhöhung 62 gebildet wird. Der erste Zwischenraum 64 wird seitlich einerseits durch die erste Profilierungserhöhung 62 und andererseits durch einen Abschnitt bzw. durch Abschnitte des Rohrblocks 46 begrenzt. Es kann vorgesehen sein, dass die Rohrzwischenräume 48 im Bereich des ersten Zwischenraums 64 mittels der Turbulenzeinlagen 50 geschlossen sind, so dass die Rohre 10 des Rohrblocks 46 bzw. dessen im Bereich des ersten Zwischenraums 64 gelegenen Abschnitte mit den im Bereich des ersten Zwischenraums 64 gelegenen Abschnitten der Turbulenzeinlagen 50 eine Begrenzungswand für den ersten Zwischenraum 64 ausbilden, die im Wesentlichen geschlossen ist. In Längsrichtung 22 der Röhre 10 gesehen wird der erste Zwischenraum 64 von dem Boden 14 begrenzt. Zu der dem Deckel 12 des ersten Kastens 2 abgewandten Seite ist der erster Zwischenraum 64 offen. Der erste Zwischenraum 64 bildet damit durch das Zusammenwirken des Boden 14 und seiner ersten Profilierungserhöhung 62 mit Abschnitten der Rohre 10 sowie gegebenenfalls mit Abschnitten der Turbulenzeinlagen 50 eine Art Nut bzw. eine Nut aus. In entsprechender Weise ist ein erster Zwischenraum im Bereich des Bodens des zweiten Kastens gegeben, der in entsprechender Weise von einer ersten Profilierungserhöhung des Bodens des zweiten Kasten, von diesem Boden sowie von Abschnitten der Rohre 10 und gegebenenfalls von Abschnitten der Turbulenzeinlagen 50 begrenzt wird.

In die erste Nut 58 des Bodens 14 des ersten Kastens 2 erstreckt sich der Deckel 12 dieses ersten Kastens 2 bzw. ein Wandabschnitt 66 des Deckels 12 dieses ersten Kastens 2. Dies ist insbesondere so, dass sich dieser Deckel 12 mit seinem umlaufenden dem Rohrblock 46 zugewandten Ende bzw. Endbereich in diese erste Nut 58 erstreckt. Es kann vorgesehen sein, dass der Wandabschnitt 66 in der ersten Nut 58 geklemmt ist. Der Deckel 12 bzw. dessen Wandabschnitt 66 ist in der ersten Nut 58 mit dem Boden verlötet, und zwar insbesondere mittels Lotplattieren. Hierdurch kann sich Lot gut in der Nut sammeln, so dass die Lotqualität bzw. die Qualität der Lötstellen verbessert wird und die Undichtigkeitsrate nach dem Löten gegenüber bekannten Gestaltungen verringert wird. Ferner wird mittels der ersten Nut 58 der Kontakt zwischen dem Boden 14 und dem Deckel 12 verbessert. Ferner wirken sich etwaige Unebenheiten des Bodens 14 weniger auf die Qualität der Verbindung zwischen dem Boden 14 und dem Deckel 12 aus, da sie durch die Nut aufgenommen werden bzw. die Verbindung mittels der ersten Nut 58, in der Lot ist bzw. sich sammeln kann, dazu führt, dass etwaige Unebenheiten "ausgeglichen" werden und nicht in dem Maße, wie es in vorbekannten Gestaltungen der Fall ist, potentielle Undichtigkeitsstellen nach dem Löten bilden. In entsprechender Weise erstreckt sich der Deckel des zweiten Kastens bzw. ein Wandabschnitt des Deckels des zweiten Kastens in die im Boden des zweiten Kastens vorgesehene erste Nut.

Die Abdeckung 40 erstreckt sich mit einem Wandabschnitt 68 in den ersten Zwischenraum 64. Dies ist hier so, dass sich der umlaufende, dem ersten Kasten 2 zugewandte Endbereich der Abdeckung 40 bzw. der jeweiligen ersten 42, zweiten, dritten 44 und vierten Kammer-Seitenwand in diesen ersten Zwischenraum 64 erstreckt. In diesem ersten Zwischenraum 64 ist die Abdeckung 40 mit dem Boden 14 bzw. den Rohren 10 bzw. den Turbulenzeinlagen 50 verlötet. In entsprechender Weise erstreckt sich ein Endbereich der Abdeckung 40 bzw. der dem zweiten Kasten zugewandte Endbereich der jeweiligen ersten 42, zweiten, dritten 44 und vierten Kammer-Seitenwand in den ersten Zwischenraum, der in entsprechender Weise mittels der ersten Profilierungserhöhung des Bodens des zweiten Kastens gebildet wird. Anzumerken ist, dass in der oben angesprochenen alternativen Gestaltung, bei der keine dritte 44 und vierte Kammer-Seitenwand gegeben ist, sich nur Randbereiche 68 der ersten 42 und zweiten Abdeckung bzw. Kammer-Seitenwand in den jeweiligen ersten Zwischenraum 64 bzw. die jeweiligen ersten Zwischenräume erstrecken.

Es ist eine Einlassöffnung für Gas, insbesondere Abgas bzw. Ladeluft, vorgesehen, sowie eine Auslassöffnung für dieses Gas, insbesondere Abgas bzw. Ladeluft. Eine dieser Öffnungen, die diese Einlassöffnung oder diese Auslassöffnung sein kann, und hier im Deckel 12 des ersten Kastens 2 vorgesehen ist, ist mit dem Bezugszeichen 70 versehen, wobei im Bereich dieser Öffnung ein Stutzen vorgesehen ist. Die andere Öffnung kann beispielsweise am zweiten Kasten vorgesehen sein.

Der Boden 14 des ersten Kastens 2 - und entsprechendes gilt für den Boden des zweiten Kastens - weist mehrere, hier beispielsweise vier, zweite Durchgangsöffnungen 72 auf. Diese zweiten Durchgangsöffnungen 72 sind hier im Nutgrund 74 der ersten Nut 58 vorgesehen bzw. in der ersten Profilierungserhöhung 62. Die zweiten Durchgangsöffnungen 72 sind jeweils schlitzförmig. Der Deckel 12 des ersten Kastens 2 - und entsprechendes gilt für den Deckel des zweiten Kastens - weist mehrere, hier beispielsweise vier, Vorsprünge auf, die hier Laschen 76 sind. Beispielsweise ist, wie hier, an der ersten Seitenwand 24, an der zweiten Seitenwand 26, an der dritten Seitenwand 28 sowie an der vierten Seitenwand 30 jeweils eine Lasche 76 vorgesehen. Diese Laschen 76 ragen vom Deckel 12 in der dem Boden 14 zugewandten Richtung vor. Die Laschen 76 erstrecken sich in bzw. durch die zweiten Durchgangsöffnungen 72.

Der Boden 14 des ersten 2 bzw. der Boden des zweiten Kastens ist im Wesentlichen eben bzw. flach gestaltet.

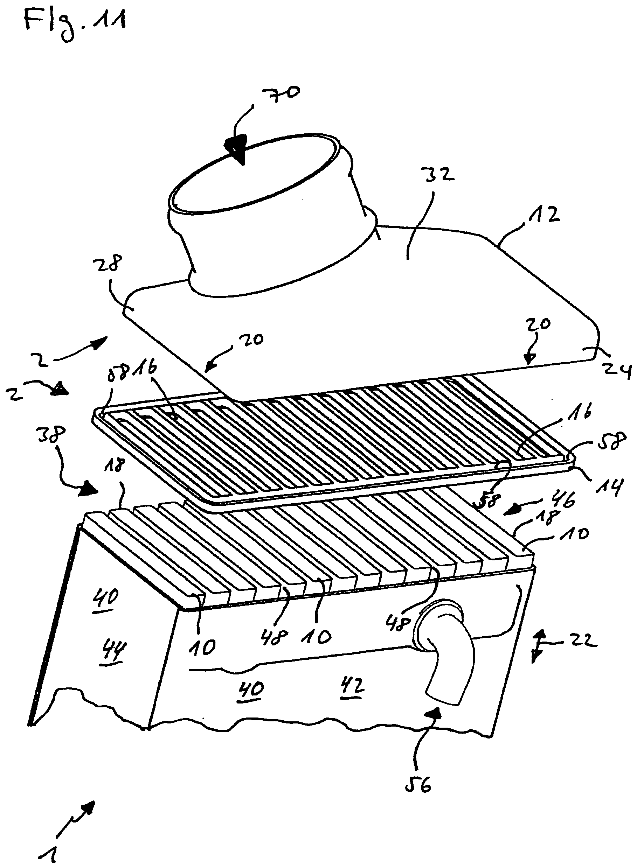

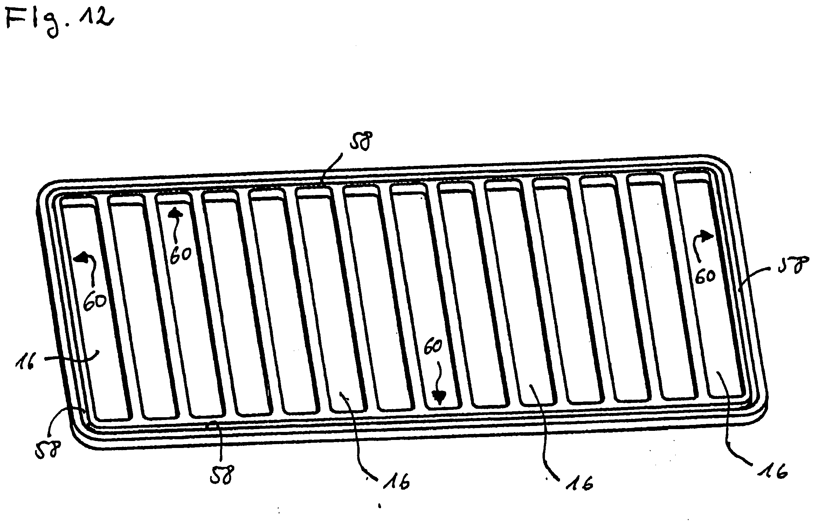

Die Fig. 11 und 12 zeigen ein weiteres Ausführungsbeispiel eines erfindungsgemäßen Wärmetauschers 1, der beispielsweise als Ladeluftkühler oder Abgaskühler für eine Brennkraftmaschine eines Kraftfahrzeugs eingesetzt werden kann.

In der Gestaltung gemäß den Fig. 11 und 12 ist der Deckel 12 gegenüber der Gestaltung gemäß den Fig. 1 bis 10 abgerundeter und flacher ausgebildet. Ferner verdeutlicht die Gestaltung gemäß den Fig. 11 und 12, dass der Deckel 12 auch asymmetrischer gestaltet sein kann, als es in der Gestaltung gemäß den Fig. 11 und 12 der Fall ist.

Die Fig. 11 und 12 zeigen ferner einen im Bereich der Öffnung 70 angeformten Stutzen, dessen Achse schräg zur Rohrlängsrichtung 22, und nicht wie in der Gestaltung gemäß den Fig. 1 bis 10 in Rohrlängsrichtung 22, verläuft.

Der im Bereich der Öffnung 56 vorgesehene Stutzen ist in der Gestaltung gemäß den Fig. 11 und 12 im Gegensatz zur Gestaltung gemäß den Fig. 1 bis 10 nicht gerade sondern gebogen geformt, und im Übrigen an abweichender Stelle an die Abdeckung 40 angeformt.

Die Turbulenzeinlagen 50 sind in der Gestaltung gemäß den Fig. 11 und 12 nicht gezeigt bzw. nicht gegeben, können aber in vorteilhafter Weiterbildung entsprechend der Gestaltung gemäß den Fig. 1 bis 10 gegeben und angeordnet sein.

Die zweite Durchgangsöffnung 72 und die Laschen 76 sind bei der Gestaltung gemäß den Fig. 11 und 12 nicht gezeigt bzw. nicht gegeben, können aber in vorteilhafter Weiterbildung entsprechend der Gestaltung gemäß den Fig. 1 bis 10 gegeben und angeordnet sein.

Im Übrigen ist der Wärmetauscher 1 gemäß den Fig. 11 und 12 im Wesentlichen so gestaltet, wie der Wärmetauscher gemäß den Fig. 1 bis 10.

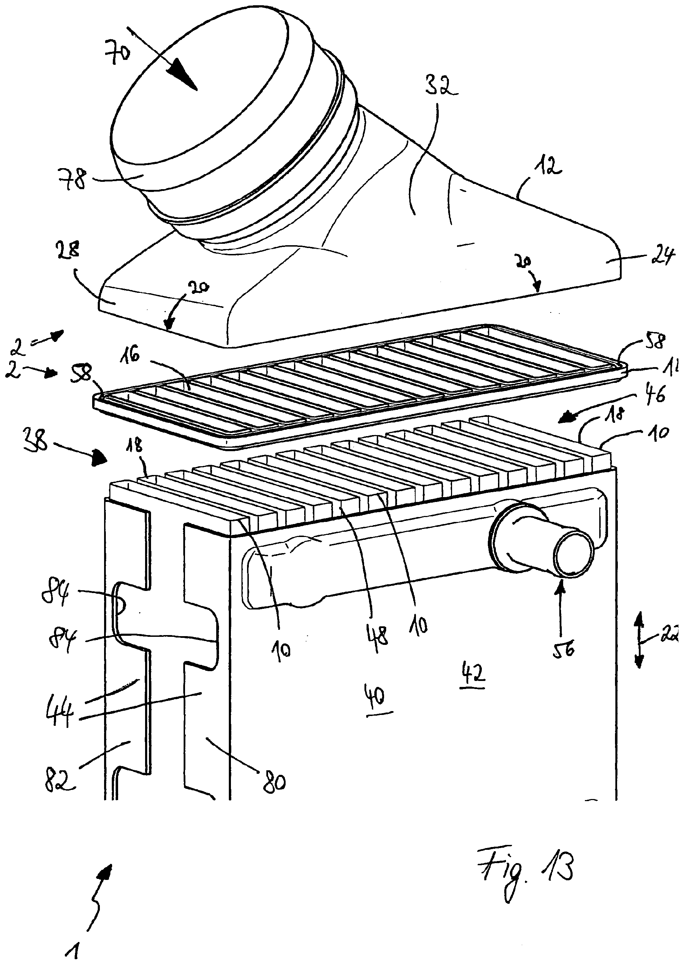

Die Fig. 13 zeigt ein weiteres Ausführungsbeispiel eines erfindungsgemäßen Wärmetauschers 1, der beispielsweise als Ladeluftkühler oder Abgaskühler für eine Brennkraftmaschine eines Kraftfahrzeugs eingesetzt werden kann. Die Teile des Wärmetauschers gemäß Fig. 13 sind vorzugsweise miteinander verlötet, und zwar insbesondere mittels Lotplattieren.

Die Fig. 13 zeigt einen im Bereich der Öffnung 70 angelöteten Stutzen 78, dessen Achse schräg zur Rohrlängsrichtung 22, und nicht wie in der Gestaltung gemäß den Fig. 1 bis 10 in Rohrlängsrichtung 22, verläuft. Der im Bereich der Öffnung 56 vorgesehene Stutzen ist in der Gestaltung gemäß Fig. 13 gerade geformt.

Die Turbulenzeinlagen 50 sind in der Gestaltung gemäß Fig. 13 nicht gezeigt bzw. nicht gegeben, können aber in vorteilhafter Weiterbildung entsprechend der Gestaltung gemäß den Fig. 1 bis 10 gegeben und angeordnet sein. Die zweite Durchgangsöffnung 72 und die Laschen 76 sind bei der Gestaltung gemäß Fig. 13 nicht gezeigt bzw. nicht gegeben, können aber in vorteilhafter Weiterbildung entsprechend der Gestaltung gemäß den Fig. 1 bis 10 gegeben und angeordnet sein.

Gemäß Fig. 13 ist die dritte Kammer-Seitenwand 44 ebenso wie die nicht sichtbare vierte Kammer-Seitenwand in einen ersten Wandabschnitt 80 und einen zweiten Wandabschnitt 82 unterteilt. Der erste Wandabschnitt 80 ist dabei als umgeformter Randbereich der ersten Kammer-Seitenwand 42 und der zweite Wandabschnitt als umgeformter Randbereich der nicht sichtbaren zweiten Kammer-Seitenwand ausgebildet. Somit umgreifen die erste und die zweite Kammer-Seitenwand den Rohrblock 46 und wirken somit gegebenenfalls als verlorene Lötvorrichtung, wodurch sich der Fertigungsvorgang vereinfacht. Wie aus Fig. 13 ersichtlich ist, weisen der erste 80 und der zweite Wandabschnitt 82 jeweils Aussparungen 84 auf, so dass Material eingespart werden kann, indem nur an den am stärksten belasteten Stellen die Rohrwand des äußersten Rohres verstärkt wird.

Im Übrigen ist der Wärmetauscher 1 gemäß Fig. 13 im Wesentlichen so gestaltet, wie die Wärmetauscher gemäß den Fig. 1 bis 12.

Wie die Ausführungsbeispiele zeigen, legt die Erfindung eine Basis dafür, bei einem Wärmetauscher Undichtigkeitsraten nach dem Löten gegenüber den eingangs erwähnten Gestaltungen zu reduzieren, sowie für einen verbesserten Kontakt zwischen den Böden und den zugeordneten Deckeln sowie zwischen den Böden und der Abdeckung bzw. den Seitenteilen bzw. dem Wassermantel. Die Ausführungsbeispiele zeigen ferner, dass es durch die Erfindung möglich geworden ist, mittels einer oder mehrerer jeweils in die Böden eingepressten bzw. eingeprägten Nuten bzw. Sicken eine gute Haltemöglichkeit für die Deckel und die Abdeckung bzw. die Seitenteile bzw. Kammer-Seitenwände bzw. den Wassermantel zu schaffen. Wie gezeigt ist vorgesehen, dass der jeweilige Deckel in einer jeweiligen ersten Nut des diesem Deckel zugeordneten Bodens aufgenommen wird, wobei diese Nut bzw. Sicke bzw. eine durch das entsprechende Einprägen bzw. Einpressen gebildete erste Profilierungserhöhung als Abstützung bzw. zur Fixierung der Abdeckung bzw. der Seitenteile bzw. der Kammer-Seitenwände bzw. des Wassermantels dient. Ferner kann anhand der Ausführungsbeispiele erkannt werden, dass die Erfindung die Basis dafür legt, dass etwaige Unebenheiten des Bodens durch die erste Nut "aufgenommen" werden, so dass der Kontakt zwischen Boden und Deckel verbessert wird, und somit eine bessere Lotqualität bzw. eine bessere Qualität der Lotstellen erreicht wird. Ferner legt die Erfindung die Basis dafür, dass sich Lot in der ersten Nut sammeln kann, und somit eine verbesserte Lotqualität bzw. eine bessere Qualität der Lotstellen erreicht wird. Überdies können bei den Gestaltungen gemäß den Ausführungsbeispielen die Deckel und Böden vormontiert werden, so dass Zeit beim Kassetieren gespart wird. Überdies kann die Bodensicke bzw. erste Profilierungserhöhung zur bzw. als Fixierung der Seitenteile bzw. des Wassermantels bzw. der Abdeckung bzw. der Kammer-Seitenwände und als Lotfläche verwendet werden, wodurch die Lotqualität bzw. die Qualität der Lotstellen verbessert werden kann.

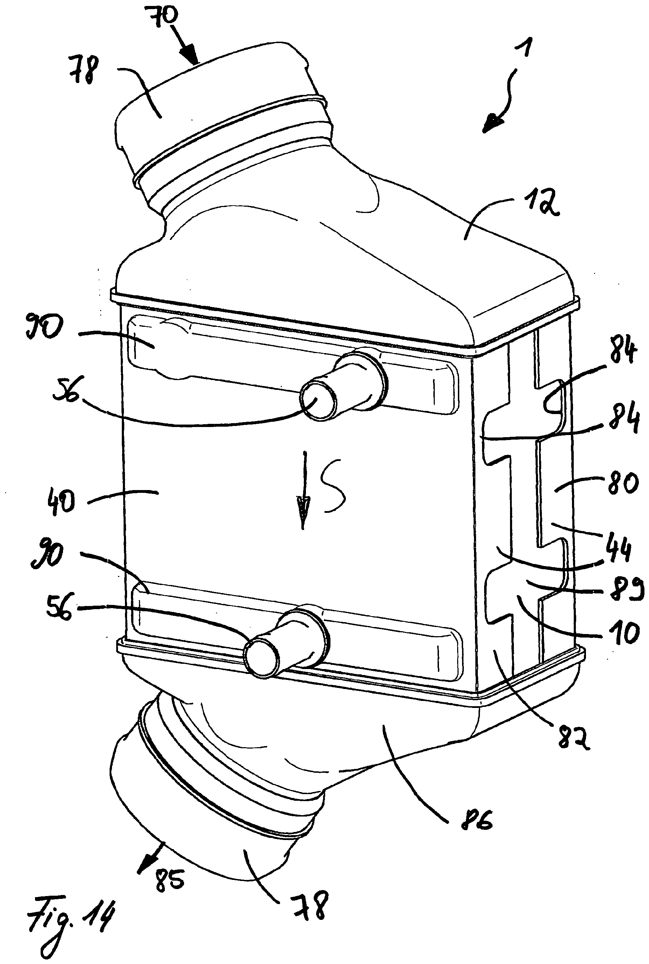

Fig. 14 zeigt eine isometrische Darstellung eines zusammengebauten Wärmetauschers 1. Gleiche Merkmale sind mit den gleichen Bezugszeichen versehen wie in den vorhergehenden Figuren.

Der Wärmetauscher 1, insbesondere der Ladeluftkühler oder Abgaskühler für eine Brennkraftmaschine eines Fahrzeuges, weist eine Anzahl von Rohren 10 auf, die in einer Abdeckung 40 angeordnet sind. Die Abdeckung 40 weist im dargestellten Ausführungsbeispiel ein erstes Abdeckungselement 87 und ein zweites Abdeckungselement 88 auf. Im dargestellten Ausführungsbeispiel ist das erste Abdeckungselement 87 identisch mit dem zweiten Abdeckungselement 88. Die Abdeckungselemente 87, 88 umschließen die Anzahl von Rohren 10. Zwischen dem ersten Abdeckungselement 87 und dem zweiten Abdeckungselement 88 ist eine Abdeckungsöffnung 89 ausgebildet, insbesondere sind jeweils auf den beiden gegenüberliegenden Kammerseitenwänden 44 Abdeckungsöffnungen 89 ausgebildet.

In einer anderen nicht dargestellten Ausführungsform ist das erste Abdeckungselement 87 anders als das zweite Abdeckungselement 88 ausgebildet.

In einer weiteren nicht dargestellten Ausführungsform sind das erste Abdeckungselement 87 und das zweite Abdeckungselement 88 einteilig ausgebildet. Das einteilig ausgebildete Abdeckungselement 87, 88 weist eine Abdeckungsöffnung 89 auf.

Die Abdeckung 40 weist mindestens eine Ausprägung 90, insbesondere zwei Ausprägungen, auf. Die Ausprägungen 90 sind nach außen hin aus der Abdeckung 40 ausgebildet. In einer anderen nicht dargestellten Ausführung weist die Abdeckung keine Ausprägungen 90 auf.

Die Abdeckung 40 weist mindestens eine Eintritts- bzw. Austrittsöffnung 56, insbesondere zwei Eintritts-/Austrittsöffnungen 56, auf. Die Austrittsöffnungen sind im Wesentlichen zylindrisch als Stutzen, insbesondere aus der Ausprägung 90, ausgebildet. Die Stutzen weisen benachbart zur Abdeckung 40 bzw. benachbart zur Ausprägung 90 einen ersten im Wesentlichen zylinderförmigen Abschnitt auf, der in mindestens einen zweiten zylinderförmigen Abschnitt übergeht. Der erste Zylinderabschnitt weist einen größeren Durchmesser als der zweite Zylinderabschnitt auf, so dass sich insbesondere der erste Zylinderabschnitt verjüngt, um in den zweiten Zylinderabschnitt überzugehen.

In der dargestellten Ausführung sind der erste Stutzen und der zweite Stutzen senkrecht zur Durchströmungsrichtung S des Wärmetauschers leicht versetzt angeordnet. In einer anderen nicht dargestellten Ausführung können der erste und der zweite Stutzen übereinander, d.h. in senkrechter Richtung zur Strömungsrichtung keinen Versatz aufweisend, angeordnet sein. In einer anderen nicht dargestellten Ausführung weisen die Stutzen einen größeren Versatz auf.

Der Wärmetauscher 1 weist zwei Deckel 12 auf. Der Deckel 12 weist mindestens einen Stutzen 78 auf. Der Stutzen 78 weist mindestens eine Öffnung 70 auf. In der dargestellten Ausführung ist der Wärmetauscher 1 im I-Flow durchströmbar.

In einer anderen nicht dargestellten Ausführung ist der Wärmetauscher 1 im U-Flow durchströmbar. Insbesondere weist der Wärmetauscher 1 dann einen Deckel 12 mit zwei Stutzen 78 auf. Der andere gegenüberliegende Deckel 12 weist keine Öffnung 70 und keinen Stutzen 78 auf.

Der Wärmetauscher 1 weist in der dargestellten Ausführungsform mindestens einen Seitenwandabschnitt 80, insbesondere zwei Seitenwandabschnitte 80, 82, der Kammer-Seitenwand 42, 44 auf. Insbesondere weist der Wärmetauscher jeweils zwei Kammerseitenwände auf.

Der Seitenwandabschnitt 80 weist mindestens eine Aussparung 84, insbesondere im dargestellten Ausführungsbeispiel jeweils vier Aussparungen 84 auf einer Seite auf. Die mindestens eine Aussparung 84 bildet zusammen mit einer weiteren Materialaussparung zwischen dem Seitenwandabschnitt 80 und dem Seitenwandabschnitt 82 eine Abdecköffnung 89. Durch die Abdecköffnung ist mindestens ein Abschnitt des Rohres 10 von außen sichtbar. In einer anderen nicht dargestellten Ausführung ist die Öffnung 89 durch eine nicht dargestellte Platte zumindest abschnittsweise, insbesondere vollständig, geschlossen. Das Rohr 10 ist dann nicht mehr von außen sichtbar.

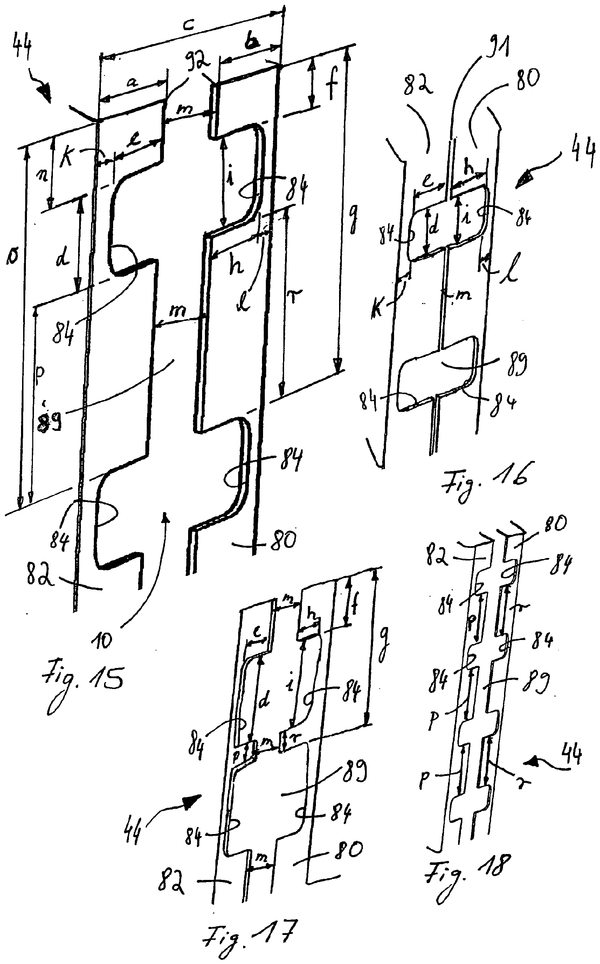

Fig. 15 zeigt eine Ausführungsform der Kammer-Seitenwand und der Seitenwandabschnitte. Gleiche Merkmale sind mit den gleichen Bezugszeichen versehen wie in den vorherigen Figuren.

Im dargestellten Ausführungsbeispiel weist die dritte Kammer-Seitenwand 44 vier Aussparungen 84 auf. Der erste Seitenwandabschnitt 80 weist davon zwei Aussparungen 84 auf. Der zweite Seitenwandabschnitt 82 weist davon zwei Aussparungen 84 auf. Zwischen dem ersten Seitenwandabschnitt 80 und dem zweiten Wandabschnitt 82 ist ein Freiraum ausgebildet. Der Freiraum weist die Abdeckungsöffnung 89 auf. Die Abdeckungsöffnung 89 umfasst die vier Aussparungen 84.

Der erste Seitenwandabschnitt 80 weist eine erste Breite b auf. Die Aussparungen 84 des ersten Wandabschnitts 80 weisen eine Breite h und eine Länge i auf. Ein erster Randabschnitt der Aussparung 84 mit der Breite h ist im Wesentlichen senkrecht zu einem zweiten Randabschnitt der Aussparung 84 mit der Länge i angeordnet. Der Übergang des ersten Randabschnitts in den zweiten Randabschnitt ist im dargestellten Ausführungsbeispiel als Radius ausgeführt. In einem anderen nicht dargestellten Ausführungsbeispiel kann der Übergang als eckig ausgeführt sein. Die einer oberen Kante 92 nächstgelegene Aussparung 84 ist in einem ersten Abstand f von der oberen Kante 92 des ersten Wandabschnitts 80 angeordnet. Eine zweite Aussparung 84 des ersten Wandabschnitts 80 ist in einem Abstand g von der oberen Kante 92 angeordnet. Weitere nicht dargestellte Aussparungen 84 sind in einem Abstand g-f voneinander angeordnet. Der erste Seitenwandabschnitt 80 weist vom zweiten Seitenwandabschnitt 82 einen Abstand m=c-ab auf, wobei a=k+e mit k≥2,5mm ist und b=h+l mit l≥2,5mm ist. Der Abstand m nimmt Werte 0≤m≤c-k-l mit k≥2,5mm und l≥2,5mm an.

Zwei benachbarte Aussparungen 84 des ersten Seitenwandabschnitts 80 weisen einen Abstand r voneinander auf, wobei r≥0mm ist.

Der zweite Seitenwandabschnitt 82 weist eine Breite a auf. Die Aussparungen 84 weisen eine Breite l und eine Länge d auf. Ein erster Randabschnitt der Aussparung 84 mit der Breite e ist im Wesentlichen senkrecht zu einem zweiten Randabschnitt mit der Länge d angeordnet. Der mindestens eine Übergang des ersten Randabschnitts in den zweiten Randabschnitt ist als Radius ausgeführt. In einer anderen nicht dargestellten Ausführung ist der Übergang als Ecke ausgeführt.

Die der oberen Kante 92 nächstgelegene Aussparung 84 ist in einem Abstand n von der oberen Kante 92 angeordnet. Eine weitere Aussparung 84 ist in einem Abstand o von der oberen Kante 92 angeordnet. In anderen nicht dargestellten Ausführungsformen weisen weitere Aussparungen 84 einen Abstand o-n voneinander auf. Zwei benachbarte Aussparungen 84 des zweiten Seitenwandabschnitts 82 weisen einen Abstand p voneinander auf, wobei p≥0mm ist.

Im dargestellten Ausführungsbeispiel sind die Breite a gleich der Breite b und/oder der Abstand f gleich dem Abstand n und/oder die Breite e gleich der Breite h und/oder die Länge i gleich der Länge d und/oder der Abstand g gleich dem Abstand o und/oder der Abstand k ist gleich dem Abstand l und/oder der Abstand p gleich dem Abstand r.

In einer anderen nicht dargestellten Ausführung sind die Breite a ungleich der Breite b und/oder die Breite e ungleich der Breite h und/oder die Länge d ungleich der Länge i und/oder der Abstand k ungleich dem Abstand l und/oder der Abstand n ungleich dem Abstand f und/oder der Abstand o ungleich dem Abstand g und/oder der Abstand p ungleich dem Abstand r.

In der dargestellten Ausführung weisen die Aussparungen 84 des ersten Seitenwandabschnitts 80 die gleiche Länge i und die gleiche Breite h auf, wobei für die Breite h gilt: 0≤h≤b-l mit h≥2,5mm. Ebenso weisen die Aussparungen 84 des zweiten Seitenwandabschnitts 82 die gleiche Länge d und die gleiche Breite e auf, wobei für die Breite e gilt: 0≤e≤a-k mit k≥2,5mm.

In einer anderen nicht dargestellten Ausführung weisen die Aussparungen 84 des ersten Seitenabschnitts 80 verschiedene Längen i und/oder verschiedene Breiten h auf.

In einer anderen nicht dargestellten Ausführung weisen die Aussparungen 84 des zweiten Seitenabschnitts 82 verschiedene Längen d und/oder verschiedene Breiten e auf.

In einer anderen nicht dargestellten Ausführung weist der erste Seitenabschnitt 80 mindestens eine Aussparung 84 auf und der zweite Seitenabschnitt 82 weist keine Aussparung 84 auf.

In einer anderen nicht dargestellten Ausführung weist der zweite Seitenabschnitt 82 mindestens eine Aussparung 84 auf und der erste Seitenabschnitt 80 weist keine Aussparung 84 auf.

Fig. 16 zeigt eine weitere Ausführungsform der Kammer-Seitenwand und der Seitenwandabschnitte. Gleiche Merkmale sind mit den gleichen Bezugszeichen versehen wie in den vorherigen Figuren.

Im dargestellten Ausführungsbeispiel nimmt im Unterschied zu Figur 15 der Abstand m zwischen dem ersten Seitenwandabschnitt 80 und dem zweiten Seitenwandabschnitt 82 besonders kleine Werte m≥0mm an. Im Falle von m=0mm handelt es sich um einen Stumpfstoß zwischen dem ersten Seitenwandabschnitt 80 und dem zweiten Seitenwandabschnitt 82. Insbesondere eine nicht dargestellte Fügevorrichtung, insbesondere Lötvorrichtung, greift durch die Aussparung 84 und übt einen Druck auf die nicht dargestellten Rohre 10 aus. Die Abdeckung 40 mit den Seitenwänden 44 ist insbesondere lotplattiert und wird während des Lötens mit mindestens einem Rohr 10 verlötet.

Fig. 17 zeigt eine weitere Ausführungsform der Kammer-Seitenwand und der Seitenwandabschnitte. Gleiche Merkmale sind mit den gleichen Bezugszeichen versehen wie in den vorherigen Figuren.

Im dargestellten Ausführungsbeispiel nimmt im Unterschied zu den Figuren 15 und 16 der Abstand p und/oder r zwischen benachbarten Aussparungen 84 besonders kleine Werte r, p an, wobei r≥0mm und/oder p≥0mm ist. Im Fall r=0mm und/oder p=0mm bilden zwei benachbarte Aussparungen 84 eines Seitenwandabschnitts 80, 82 eine Aussparung 84. Auf diese Weise kann die Fügevorrichtung, insbesondere die Lötvorrichtung, eine große Fläche aufweisen. Damit kann insbesondere ein größerer Druck auf die nicht dargestellten Rohre 10 während des Fügens, insbesondere während des Lötens ausgeübt werden. Insbesondere kann die Druckfläche besonders vorteilhaft vergrößert werden, was zu einer besseren Fügeverbindung, insbesondere Lötverbindung, führt.

Fig. 18 zeigt eine weitere Ausführungsform der Kammer-Seitenwand und der Seitenwandabschnitte. Gleiche Merkmale sind mit den gleichen Bezugszeichen versehen wie in den vorherigen Figuren.

Im dargestellten Ausführungsbeispiel sind im Unterschied zu den Figuren 15, 16 und 17 vier Aussparungen 84 dargestellt.

In einem anderen nicht dargestellten Ausführungsbeispiel weist die Abdeckung mehr als vier Aussparungen 84 auf.

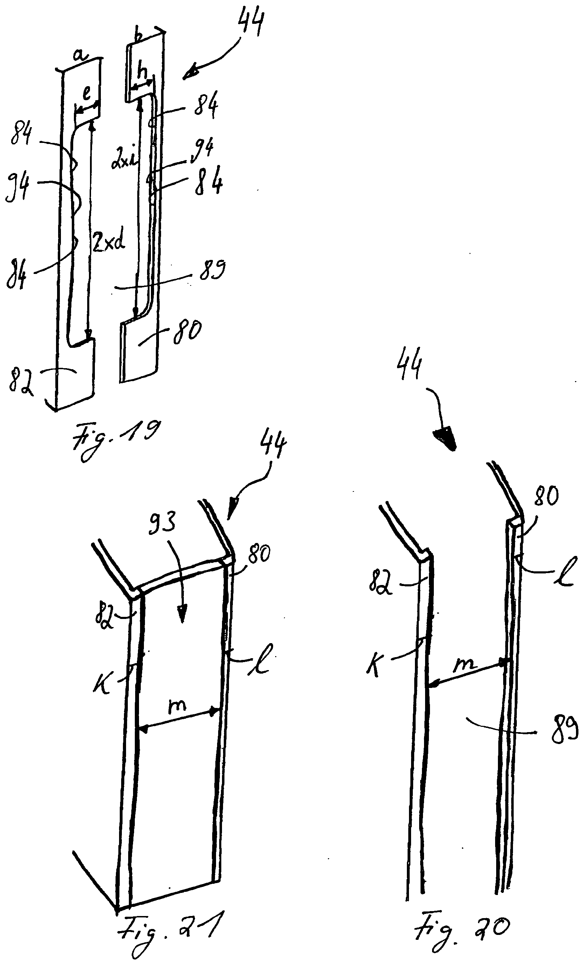

Fig. 19 zeigt eine weitere Ausführungsform der Kammer-Seitenwand und der Seitenwandabschnitte. Gleiche Merkmale sind mit den gleichen Bezugszeichen versehen wie in den vorherigen Figuren.

Im dargestellten Ausführungsbeispiel ist der Fall gezeigt mit r=0 und p=0. Dabei bilden jeweils zwei Aussparungen 84 eine große Aussparung 94.

Fig. 20 zeigt eine weitere Ausführungsform der Kammer-Seitenwand und der Seitenwandabschnitte. Gleiche Merkmale sind mit den gleichen Bezugszeichen versehen wie in den vorherigen Figuren.

Im dargestellten Ausführungsbeispiel sind im Unterschied zu den Figuren 15, 16, 17, 18 und 19 keine Aussparungen 84 in dem ersten Wandabschnitt 80 und dem zweiten Wandabschnitt 82 ausgebildet. Der Abstand k ist insbesondere 2,5mm und/oder der Abstand l ist insbesondere 2,5mm.

In einem anderen nicht dargestellten Ausführungsbeispiel ist der Abstand k>2,5mm und/oder der Abstand l>2,5mm.

Fig. 21 zeigt eine weitere Ausführungsform der Kammer-Seitenwand und der Seitenwandabschnitte. Gleiche Merkmale sind mit den gleichen Bezugszeichen versehen wie in den vorherigen Figuren.

Im dargestellten Ausführungsbeispiel sind im Unterschied zu den Figuren 15, 16, 17, 18, 19 und 20 keine Aussparungen 84 in dem ersten Wandabschnitt 80 und dem zweiten Wandabschnitt 82 ausgebildet. In die Öffnung 89 der Figur 20 ist eine Platte 93 eingebracht. Die Platte 93 berührt insbesondere den ersten Seitenwandabschnitt 80 und/oder den zweiten Seitenwandabschnitt 82 zumindest abschnittsweise. Die Platte 93 ist insbesondere stoffschlüssig durch Löten und/oder Schweißen und/oder Kleben mit den nicht dargestellten Rohren 10 und/oder mit dem ersten und/oder dem zweiten Seitenwandabschnitt 80, 82 verbunden.

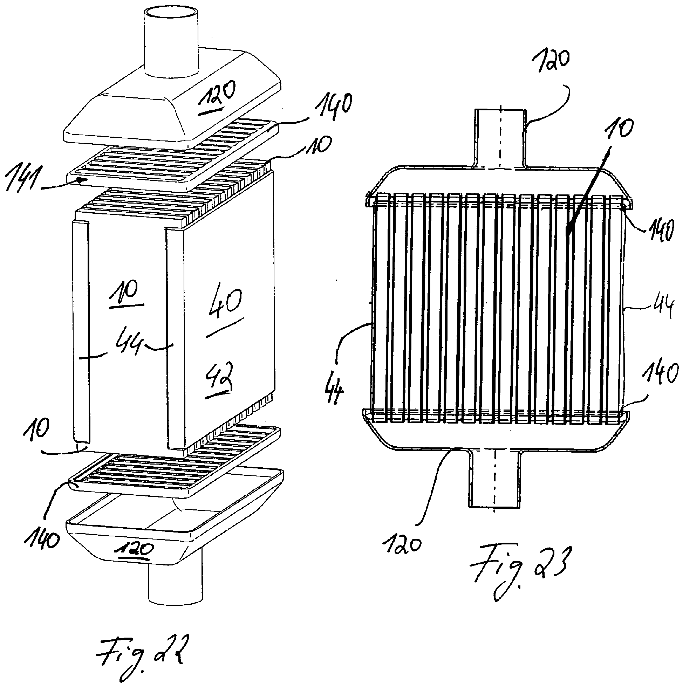

Figur 22 und Figur 23 zeigen eine isometrische Darstellung einer weiteren Ausführungsform der Verbindung des Deckels mit dem Boden und der Seitenabdeckung. Gleiche Merkmale sind mit den gleichen Bezugszeichen versehen wie in den vorhergehenden Figuren.

Im Unterschied zu den vorhergehenden Figuren berührt der Deckel 120, der im Wesentlichen identisch ausgebildet ist wie der Deckel 12, den Boden 140 zumindest bereichsweise und/oder ist stoffschlüssig mit dem Boden 140 verbunden, insbesondere durch Schweißen, Löten, Kleben usw.

Der Boden 140 ist im Wesentlichen wie der Boden 14 ausgebildet. Der Boden 140 weist einen umlaufenden Rand 141 auf, an dem der Boden 140 mit dem Deckel 120 verbunden, insbesondere stoffschlüssig durch Löten, Schweißen, Kleben usw. und/oder formschlüssig durch Bördeln, Falzen, Verkrimpen verbunden ist.

Ferner berührt der Deckel 120 zumindest abschnittsweise die Abdeckung 40 bzw. insbesondere die Seitenwand 42 und/oder die Seitenwand 44. Der Deckel 120 ist zumindest abschnittsweise mit der Abdeckung 40 bzw. insbesondere mit der Seitenwand 42 und/oder mit der Seitenwand 44 stoffschlüssig, insbesondere durch Schweißen, Löten, Kleben usw. und/oder formschlüssig durch Verkrimpen, Falzen, Bördeln usw. verbunden.

Darüber hinaus berührt der Deckel 120 zumindest abschnittsweise zumindest ein Rohr 10 zumindest abschnittsweise und ist insbesondere stoffschlüssig, beispielsweise durch Schweißen, Löten, Kleben mit dem zumindest einen Rohr 10, insbesondere mit einer Mehrzahl von Rohren 10, verbunden.

Die Abdeckung 40 und insbesondere die Seitenwände 42 und/oder die Seitenwände 44 können wie in den vorhergehenden Figuren dargestellt und beschrieben ausgeführt sein.

### Bezugszeichenliste

- 1: Wärmetauscher
- 2: erster Kasten von 1
- 10: Rohr bzw. Flachrohr von 1
- 12: Deckel von 2
- 14: Boden von 2
- 16: erste Durchgangsöffnung in 14
- 18: erstes Ende von 10
- 20: 10 zugewandter Endbereich von
- 22: Längsrichtung von 10
- 24: erste Seitenwand von 12
- 26: zweite Seitenwand von 12
- 28: dritte Seitenwand von 12
- 30: vierte Seitenwand von 12
- 32: 14 gegenüberliegende Wand
- 34: Schlitz in 24, 26, 28
- 36: Schlitz in 24, 26, 28
- 38: Kammer
- 40: Abdeckung
- 42: erste Kammer-Seitenwand von 38
- 44: dritte Kammer-Seitenwand von 38
- 46: Rohrblock
- 48: Rohrzwischenraum
- 50: Turbulenzeinlagen
- 52: umlaufender Randbereich von 42
- 54: gewölbter Übergangsbereich
- 56: Eintritts- bzw. Austrittsöffnung für Kühlmittel
- 58: in 14 eingeprägte erste Nut
- 60: Randbereich von 14
- 62: erste Profilierungserhöhung von 14
- 64: erster Zwischenraum zwischen 46 und 62
- 66: Wandabschnitt von 12
- 68: Wandabschnitt von 40
- 70: Öffnung
- 72: zweite Durchgangsöffnung in 14
- 74: Nutgrund von 58
- 76: Lasche von 14
- 78: Stutzen
- 80: Seitenwandabschnitt von 44
- 82: Seitenwandabschnitt von 44
- 84: Aussparungen in 80, 82
- 85: zweite Öffnung
- 86: zweiter Deckel
- 87: erstes Abdeckungselement
- 88: zweites Abdeckungselement
- 89: Abdeckungsöffnung
- 90: Ausprägung
- 91: Seitenflächenöffnung
- 92: obere Kante
- 93: Platte
- a: Breite a Seitenabschnitt 82
- b: Breite b Seitenabschnitt 82
- c: Länge c
- d: Länge d Aussparung 84
- e: Breite e Aussparung 84
- f: Abstand f der Aussparung 84
- g: Abstand g der Aussparung 84
- h: Breite h der Aussparung 84
- i: Länge i der Aussparung 84
- k: Breite k Seitenabschnitt 82
- l: Breite l Seitenabschnitt 80
- m: Abstand Seitenabschnitt 80 von Seitenabschnitt 82
- n: Abstand n der Aussparung 84
- o: Abstand o der Aussparung 84
- p: Abstand p zweiter Aussparungen 84
- r: Abstand z zweier Aussparungen 84

## Patentansprüche

1. Ladeluftkühler oder Abgaskühler für eine Brennkraftmaschine eines Kraftfahrzeuges, mit einem ersten Kasten (2) und einem beabstandet zu diesem ersten Kasten (2) angeordneten zweiten Kasten und mit einer Vielzahl Rohren (10), mittels welchen der erste (2) und der zweite Kasten strömungsverbunden sind, und mit einer von einem Kühlmittel durchströmbaren Kammer (38), die zwischen den beiden Kästen (2) vorgesehen ist und durch welche mehrere oder alle der Rohre (10) verlaufen, über welche die beiden Kästen (2) strömungsverbunden sind,
wobei zumindest einer dieser beiden Kästen (2) einen Deckel (12) aufweist, sowie einen mit diesem Deckel (12) verbundenen, und mit einer oder mehreren ersten Durchgangsöffnungen (16) zur Aufnahme der Rohre (10) versehenen Boden (14),
wobei dieser Boden (14) wenigstens eine erste Nut (58) aufweist, in welche sich der Deckel (12) bzw. ein Wandabschnitt (66) des Deckels (12) desselben Kastens (2) erstreckt,
wobei für die Begrenzung der Kammer (38) zumindest eine Abdeckung (40), insbesondere ein Abdeckblech, vorgesehen ist,
und wobei der Boden (14) wenigstens eine zweite Nut aufweist, in welche sich ein Wandabschnitt (68) der Abdeckung (40) erstreckt, wobei die erste Nut (58) und die zweite Nut eine in einem Randbereich (60) des Bodens (14) umlaufende Nut ist,
wobei die erste Nut (58) und die zweite Nut eine in den Boden (14) eingeprägte bzw. eingepresste Nut ist,
und wobei die Kammer (38) auf zwei weiteren gegenüberliegenden, insbesondere quer zu den von diesen Flachrohren (10) aufgespannten Ebenen gelegenen, und sich zwischen den Kästen (2) erstreckenden Seiten jeweils mittels der Abdeckung (40), insbesondere mittels des Abdeckblechs, begrenzt wird,
**dadurch gekennzeichnet, dass** die Kammer (38) auf zwei gegenüberliegenden Seiten mittels als Flachrohren ausgebildeten Rohren (10) begrenzt wird, über welche der erste Kasten (2) mit dem zweiten Kasten strömungsverbunden sind.

2. Ladeluftkühler oder Abgaskühler nach Anspruch 1, **dadurch gekennzeichnet, dass** die Kammer (38) auf den in Längserstreckungsrichtung (22) der Rohre (10) gegenüberliegenden Seiten von den Kästen (2) begrenzt wird, und zwar insbesondere auf der einen dieser beiden in Längserstreckungsrichtung (22) der Rohre (10) gegenüberliegenden Seiten von einem Boden (14) des ersten Kastens (2) und auf der anderen dieser beiden in Längserstreckungsrichtung (22) der Rohre (10) gegenüberliegenden Seiten von einem Boden des zweiten Kastens.

3. Ladeluftkühler oder Abgaskühler nach einem der Ansprüche 1 oder 2, **dadurch gekennzeichnet, dass** der Boden (14) auf seiner dem Deckel (12) des gleichen Kastens (2) abgewandten Seite wenigstens eine erste Profilierungserhöhung (62), insbesondere eine im äußeren Randbereich (60) des Bodens (14) umlaufende erste Profilierungserhöhung (62), aufweist.

4. Ladeluftkühler oder Abgaskühler nach Anspruch 3, **dadurch gekennzeichnet, dass** die erste Profilierungserhöhung (62) des Bodens (14) des ersten Kastens (2) quer, insbesondere senkrecht, zur Längserstreckungsrichtung (22) der Rohre (10) von dem von den Rohren (10), insbesondere Flachrohren, gebildeten Rohrblock (46) beabstandet ist, so dass quer, insbesondere senkrecht, zur Längserstreckungsrichtung (22) der Rohre (10) wenigstens ein erster Zwischenraum (64) zwischen diesem Rohrblock (46) und dieser ersten Profilierungserhöhung (62) gebildet wird, wobei für die Begrenzung der Kammer (38) zumindest eine Abdeckung (40), insbesondere ein Abdeckblech, vorgesehen ist, und wobei sich ein Wandabschnitt (68) dieser Abdeckung (40) in diesen ersten Zwischenraum (64) erstreckt.

5. Ladeluftkühler oder Abgaskühler nach Anspruch 4, **dadurch gekennzeichnet, dass** der sich in den zwischen dem Rohrblock (46) und der ersten Profilierungserhöhung (62) gebildete erste Zwischenraum (64) erstreckende Wandabschnitt (68) der Abdeckung (40) im Wesentlichen an diesem Rohrblock (46) und / oder an dieser ersten Profilierungserhöhung (62) anliegt.

6. Ladeluftkühler oder Abgaskühler nach einem der Ansprüche 1 bis 3, **dadurch gekennzeichnet, dass** der Boden (14) auf seiner dem Deckel (12) des gleichen Kastens (2) zugewandten Seite wenigstens eine zweite Profilierungserhöhung, insbesondere eine im äußeren Randbereich (60) des Bodens (14) umlaufende zweite Profilierungserhöhung, aufweist.

7. Ladeluftkühler oder Abgaskühler nach Anspruch 6, **dadurch gekennzeichnet, dass** die zweite Profilierungserhöhung quer, insbesondere senkrecht, zur Längserstreckungsrichtung (22) der Rohre (10) von dem von den Rohren (10), insbesondere Flachrohren, gebildeten Rohrblock (46) beabstandet ist, so dass quer, insbesondere senkrecht, zur Längserstreckungsrichtung (22) der Rohre (10) wenigstens ein zweiter Zwischenraum zwischen diesem Rohrblock (46) und dieser zweiten Profilierungserhöhung gebildet wird, wobei für die Begrenzung der Kammer (38) zumindest eine Abdeckung (40), insbesondere Abdeckblech, vorgesehen ist, und wobei sich ein Wandabschnitt (66) des Deckels (12) in diesen zweiten Zwischenraum erstreckt.

## Claims

1. A charge-air cooler or an exhaust gas cooler for an internal combustion engine of a motor vehicle, having a first box (2) and a second box which is arranged spaced apart from said first box (2), and having a plurality of pipes (10) by means of which the first (2) and the second box are fluidically connected, and having a chamber (38) through which a coolant can flow and which is provided between the two boxes (2) and through which a plurality of, or all of, the pipes (10), via which the two boxes (2) are fluidically connected, extend,
wherein at least one of said two boxes (2) has a lid (12) and a bottom (14) which is connected to this lid (12) and is provided with one or more first through openings (16) for holding the pipes (10),
wherein this bottom (14) has at least a first groove (58) into which the lid (12) and a wall section (66) of the lid (12) of the same box (2) extends,
wherein at least one covering (40), in particular a covering plate, is provided for bounding the chamber (38),
and wherein the bottom (14) has at least a second groove into which a wall section (68) of the covering (40) extends, wherein the first groove (58) and the second groove are a peripheral groove in an edge region (60) of the bottom (14),
wherein the first groove (58) and the second groove are a groove which is embossed or impressed into the bottom (14),
and wherein the chamber (38) is bounded on two further sides which are opposite one another, in particular, are positioned transversely with respect to the planes formed by said flat pipes (10), and respectively extend between the boxes (2) by means of the covering (40), in particular by means of the covering plate,
**characterised in that** the chamber (38) is bounded on two sides lying opposite one another by means of pipes (10) which are embodied as flat pipes and via which the first box (2) is fluidically connected to the second box.

2. The charge-air cooler or exhaust gas cooler as claimed in claim 1, **characterised in that** the chamber (38) is bounded by the boxes (2) on the sides lying opposite one another in the direction (22) of the longitudinal extent of the pipes (10), to be precise in particular by a bottom (14) of the first box (2) on one of said two sides lying opposite one another in the direction (22) of the longitudinal extent of pipes (10), and by a bottom of the second box on the other of said two sides lying opposite one another in the direction (22) of the longitudinal extent of the pipes (10).

3. The charge-air cooler or exhaust gas cooler as claimed in one of claims 1 or 2, **characterised in that** the bottom (14) has, on its side facing away from the lid (12) of the same box (2), at least a first profile elevation (62), in particular a first profile elevation (62) which runs around in the outer edge region (60) of the bottom (14).

4. The charge-air cooler or exhaust gas cooler as claimed in claim 3, **characterised in that** the first profile elevation (62) of the bottom (14) of the first box (2) is spaced apart transversely, in particular perpendicularly, with respect to the direction (22) of the longitudinal extent of the pipes (10), by the pipe block (46) formed by the pipes (10), in particular flat pipes, with the result that at least a first intermediate space (64) is formed between this pipe block (46) and this first profile elevation (62), transversely, in particular perpendicularly, with respect to the direction (22) of longitudinal extent of the pipes (10), wherein at least one covering (40), in particular a covering plate, is provided for bounding the chamber (38), and wherein a wall section (68) of this covering (40) extends into this first intermediate space (64).

5. The charge-air cooler or exhaust gas cooler as claimed in claim 4, **characterised in that** the wall section (68), extending into the first intermediate space (64) formed between the pipe block (46) and the first profile elevation (62), of the covering (40) bears essentially against said pipe block (46) and/or against said first profile elevation (62).

6. The charge-air cooler or exhaust gas cooler as claimed in one of claims 1 to 3, **characterised in that** the bottom (14) has, on its side facing the lid (12) of the same box (2), at least a second profile elevation, in particular a second profile elevation which runs around in the outer edge region (60) of the bottom (14).

7. The charge-air cooler or exhaust gas cooler as claimed in claim 6, **characterised in that** the second profile elevation is spaced apart transversely, in particularly perpendicularly, with respect to the direction (22) of the longitudinal extent of the pipes (10), by the pipe block (46) formed by the pipes (10), in particular flat pipes, with the result that at least a second intermediate space is formed between said pipe block (46) and said second profile elevation, transversely, in particular perpendicularly with respect to the direction (22) of the longitudinal extent of the pipes (10), wherein at least one covering (40), in particular a covering plate, is provided for bounding the chamber (38), and wherein a wall section (66) of the lid (12) extends into said second intermediate space.

## Revendications

1. Refroidisseur d'air de suralimentation ou refroidisseur de gaz d'échappement pour un moteur à combustion interne d'un véhicule automobile, comprenant un premier bac (2) et un second bac disposé en étant espacé par rapport à ce premier bac (2), et comprenant une multiplicité de tubes (10) au moyen desquels le premier (2) et le second bac sont fluidiquement reliés, et comprenant une chambre (38) traversée par un liquide de refroidissement, chambre qui est prévue entre les deux bacs (2) et à travers laquelle s'étend une pluralité ou la totalité des tubes (10) par lesquels les deux bacs (2) sont fluidiquement reliés,
où au moins l'un de ces deux bacs (2) présente un couvercle (12) ainsi qu'un fond (14) relié à ce couvercle (12) et doté d'une ou de plusieurs premières ouvertures de passage (16) servant au logement des tubes (10),
où ce fond (14) présente au moins une première rainure (58) dans laquelle s'étend le couvercle (12) ou une partie de paroi (66) du couvercle (12) du même bac (2),
où il est prévu, pour la délimitation de la chambre (38), au moins un élément de recouvrement (40), en particulier une tôle de recouvrement,
et où le fond (14) présente au moins une deuxième rainure dans laquelle s'étend une partie de paroi (68) de l'élément de recouvrement (40), où la première rainure (58) - et respectivement la deuxième rainure - est une rainure circulaire située dans une zone de bordure (60) du fond (14),
où la première rainure (58) - et respectivement la deuxième rainure - est une rainure gaufrée ou estampée dans le fond (14),
et où la chambre (38), sur deux autres côtés opposés situés en particulier de manière transversale par rapport aux plans définis par ces tubes plats (10) et s'étendant entre les bacs (2), est délimitée à chaque fois au moyen de l'élément de recouvrement (40), en particulier au moyen de la tôle de recouvrement, **caractérisé en ce que** la chambre (38) est délimitée, sur deux côtés opposés, au moyen de tubes (10) configurés comme des tubes plats par lesquels le premier bac (2) et le second bac sont fluidiquement reliés.

2. Refroidisseur d'air de suralimentation ou refroidisseur de gaz d'échappement selon la revendication 1, **caractérisé en ce que** la chambre (38), sur les côtés opposés dans la direction d'étendue longitudinale (22) des tubes (10), est délimitée par les bacs (2) et, à savoir, en particulier sur l'un de ces deux côtés opposés dans la direction d'étendue longitudinale (22) des tubes (10), est délimitée par un fond (14) du premier bac (2) et, sur l'autre de ces deux côtés opposés dans la direction d'étendue longitudinale (22) des tubes (10), est délimitée par un fond du second bac.

3. Refroidisseur d'air de suralimentation ou refroidisseur de gaz d'échappement selon l'une des revendications 1 ou 2, **caractérisé en ce que** le fond (14), sur son côté placé à l'opposé du couvercle (12) du même bac (2), présente au moins une première élévation de profilage (62), en particulier une première élévation de profilage (62) circulaire située dans la zone de bordure extérieure (60) du fond (14).

4. Refroidisseur d'air de suralimentation ou refroidisseur de gaz d'échappement selon la revendication 3, **caractérisé en ce que** la première élévation de profilage (62) du fond (14) du premier bac (2), se produisant de manière transversale, en particulier de manière perpendiculaire, par rapport à la direction d'étendue longitudinale (22) des tubes (10), est espacée du bloc de tubes (46) formé par les tubes (10), en particulier des tubes plats, de sorte que, de manière transversale, en particulier de manière perpendiculaire, par rapport à la direction d'étendue longitudinale (22) des tubes (10), est formé au moins un premier espace intermédiaire (64) situé entre ce bloc de tubes (46) et cette première élévation de profilage (62), où, pour la délimitation de la chambre (38), il est prévu au moins un élément de recouvrement (40), en particulier une tôle de recouvrement, et où une partie de paroi (68) de cet élément de recouvrement (40) s'étend dans ce premier espace intermédiaire (64).

5. Refroidisseur d'air de suralimentation ou refroidisseur de gaz d'échappement selon la revendication 4, **caractérisé en ce que** la partie de paroi (68) de l'élément de recouvrement (40), qui s'étend dans le premier espace intermédiaire (64) formé entre le bloc de tubes (46) et la première élévation de profilage (62), est en appui essentiellement sur ce bloc de tubes (46) et / ou sur cette première élévation de profilage (62).

6. Refroidisseur d'air de suralimentation ou refroidisseur de gaz d'échappement selon l'une quelconque des revendications 1 à 3, **caractérisé en ce que** le fond (14), sur son côté tourné vers le couvercle (12) du même bac (2), présente au moins une deuxième élévation de profilage, en particulier une deuxième élévation de profilage circulaire située dans la zone de bordure extérieure (60) du fond (14).

7. Refroidisseur d'air de suralimentation ou refroidisseur de gaz d'échappement selon la revendication 6, **caractérisé en ce que** la deuxième élévation de profilage, se produisant de manière transversale, en particulier de manière perpendiculaire, par rapport à la direction d'étendue longitudinale (22) des tubes (10), est espacée du bloc de tubes (46) formé par les tubes (10), en particulier des tubes plats, de sorte que, de manière transversale, en particulier de manière perpendiculaire, par rapport à la direction d'étendue longitudinale (22) des tubes (10), est formé au moins un deuxième espace intermédiaire située entre ce bloc de tubes (46) et cette deuxième élévation de profilage, où, pour la délimitation de la chambre (38), il est prévu au moins un élément de recouvrement (40), en particulier une tôle de recouvrement, et où une partie de paroi (66) du couvercle (12) s'étend dans ce deuxième espace intermédiaire.
